# EUROPÄISCHE PATENTSCHRIFT

(11) **EP 4 069 561 B1**
(45) Veröffentlichungstag und Bekanntmachung des Hinweises auf die Patenterteilung: **02.08.2023**
(21) Anmeldenummer: 20817275.9
(22) Anmeldetag: 01.12.2020
(51) Int. Cl.: B60T 13/68

(54) **ELEKTRISCH STEUERBARES PNEUMATISCHES BREMSSYSTEM MIT EINEM ZWEIKANALIGEN DRUCKMODULATORSYSTEM**
ELECTRIC CONTROLABLE PNEUMATIC BRAKE SYSTEM WITH TWO CHANNEL PRESSURE MODULATOR
SYSTÈME DE FREIN PNEUMATIQUE AVEC MODULATEUR DE PRESSION À DEUX CANAUX

(30) Priorität: 04.12.2019 DE 102019133012
(43) Veröffentlichungstag der Anmeldung: 12.10.2022
(73) Patentinhaber: ZF CV Systems Global GmbH, 3006 Bern (CH)
(72) Erfinder: VAN THIEL, Julian, 30938 Grossburgwedel (DE); WULF, Oliver, 31535 Neustadt (DE)
(74) Vertreter: Ohlendorf, Henrike
(86) Internationale Anmeldenummer: PCT/EP2020/084044
(87) Internationale Veröffentlichungsnummer: WO 2021/110640

(56) Entgegenhaltungen:
- DE-A1-102016 005 318
- DE-A1-102016 010 462
- DE-A1-102017 002 718
- DE-A1-102017 002 721
- DE-A1-102017 003 782
- DE-A1-102017 005 979
- DE-A1-102017 010 716

## Beschreibung

Die Erfindung betrifft ein elektrisch steuerbares pneumatisches Bremssystem für ein Fahrzeug, insbesondere Nutzfahrzeug, aufweisend einen Vorderachsbremskreis für eine Vorderachse des Fahrzeugs mit einem ersten Druckluftvorrat und Vorderachsbremsaktuatoren, einen Hinterachsbremskreis für wenigstens eine Hinterachse des Fahrzeugs mit einem zweiten Druckluftvorrat und Hinterachsbremsaktuatoren, und einen manuell betätigbaren Bremswertgeber, der mit dem ersten und dem zweiten Druckluftvorrat verbunden ist, und bei Betätigung einen ersten Vorderachs-Bremssteuerdruck und einen ersten Hinterachs-Bremssteuerdruck aussteuert, wobei der Vorderachsbremskreis ein Vorderachs-Relaisventil aufweist, das mit dem ersten Druckluftvorrat verbunden ist und dazu ausgebildet ist, bei Empfang eines Vorderachs-Bremsanforderungsdrucks einen Vorderachsbremsdruck an den Vorderachsbremsaktuatoren auszusteuern, und wobei der Hinterachsbremskreis ein Hinterachs-Relaisventil aufweist, das mit dem zweiten Druckluftvorrat verbunden ist und dazu ausgebildet ist, bei Empfang eines Hinterachs-Bremsanforderungsdrucks einen Hinterachsbremsdruck an den Hinterachsbremsaktuatoren auszusteuern. Ferner betrifft die Erfindung ein Fahrzeug mit einem derartigen elektrisch steuerbaren pneumatischen Bremssystem.

In modernen elektronisch steuerbaren pneumatischen Bremssystemen, die insbesondere bei Nutzfahrzeugen eingesetzt werden, die für einen autonomen Fahrbetrieb vorgesehen sind, ist es wichtig, Maßnahmen bereitzustellen, die bei einem Fehler in dem Bremssystem dennoch ein sicheres Verzögern des Nutzfahrzeugs zulassen. Hier gibt es Ansätze, vollständig redundante Bremssysteme einzusetzen, teilweise redundante Bremssysteme oder nur verschiedene Ebenen in einem Bremssystem, sodass bei einem Fehler in einer ersten Ebene das Bremssystem in einer zweiten Ebene wenigstens eingeschränkt weiterbetrieben werden kann.

Tritt jedoch beispielsweise ein Doppelfehler auf, der sowohl das primäre Bremssystem als auch das redundante Bremssystem betrifft, besteht Gefahr, dass das Nutzfahrzeug nicht mehr kontrolliert gebremst werden kann. Für solche Fälle besteht Bedarf, ein System bereitzustellen, das ein sicheres Verzögern des Fahrzeugs zulässt.

Ein System, das insbesondere auf eine hohe Restverfügbarkeit abzielt, ist beispielsweise aus DE 10 2014 013 756 B3 bekannt. Dort ist eine elektrische Ausrüstung eines Fahrzeugs mit einer wenigstens teilweise elektrischen Brems- und Lenkeinrichtung offenbart, die umfasst: eine elektrische oder elektromechanische Lenkeinrichtung, die mit einem Lenkgetriebe verbunden ist und eine elektronische Lenksteuereinrichtung sowie einen elektrischen Lenksteller umfasst, und eine Betriebsbremseinrichtung. Als Betriebsbremseinrichtung wird in DE 10 2014 013 756 B3 eine elektropneumatische Betriebsbremseinrichtung vorgeschlagen, welche eine elektropneumatische Betriebsbremsventileinrichtung, eine elektronische Bremssteuereinrichtung, elektropneumatische Modulatoren sowie pneumatische Radbremsaktuatoren umfasst, wobei die elektronische Bremssteuereinrichtung die elektropneumatischen Modulatoren elektrisch steuert, um pneumatische Bremsdrücke oder Bremssteuerdrücke für die pneumatischen Radbremsaktuatoren radindividuell, achsindividuell oder seitenindividuell zu erzeugen. Die elektropneumatische Betriebsbremsventileinrichtung weist ein Betriebsbremsbetätigungsorgan, sowie ferner innerhalb eines elektrischen Betriebsbremskreises einen elektrischen Kanal mit einem vom Betriebsbremsbetätigungsorgan betätigbaren elektrischen Bremswertgeber auf. Weiterhin ist eine die Betätigungssignale empfangende elektronische Auswerteeinrichtung vorgesehen, welche abhängig von den Betätigungssignalen Bremsanforderungssignale in die elektronische Bremssteuereinrichtung einsteuert, sowie innerhalb wenigstens eines pneumatischen Betriebsbremskreises wenigsten einen pneumatischen Kanal umfasst, bei welchem durch Betätigung des Betriebsbremsbetätigungsorgans aufgrund einer Fahrerbremsanforderung wenigstens ein Steuerkolben der Betriebsbremsventileinrichtung mit einer ersten Betätigungskraft belastet wird und der Steuerkolben in Antwort hierauf es erlaubt, pneumatische Bremsdrücke bzw. Bremssteuerdrücke für die pneumatischen Radbremsaktuatoren zu erzeugen. Die elektronische Auswerteeinrichtung der elektropneumatischen Betriebsbremsventileinrichtung umfasst weiterhin elektronische Steuermittel zum Erzeugen einer zweiten Betätigungskraft, unabhängig von einer Fahrerbremsanforderung, welche bei Vorliegen einer vom Fahrerwunsch unabhängigen Bremsanforderung im Bezug zur ersten Betätigungskraft gleichsinnig oder gegensinnig auf den Steuerkolben wirkt. Die elektropneumatische Betriebsbremseinrichtung wird von einer elektrischen Energiequelle versorgt, welche unabhängig von einer zweiten elektrischen Energiequelle ist, welche die elektropneumatische Betriebsbremsventileinrichtung mit elektrischer Energie versorgt. Hierdurch wird sichergestellt, dass wenigstens eines der beiden Systeme möglichst immer funktioniert. Die elektrische oder elektropneumatische Lenkeinrichtung wird dabei von der zweiten elektrischen Energiequelle mit Energie versorgt. Hierdurch soll eine hohe Restverfügbarkeit erreicht werden. Das System ist allerdings komplex und lässt sich so nicht ohne Weiteres in jedem Nutzfahrzeug umsetzen.

Ein System, das eine elektronisch pneumatisch gesteuerte Redundanz bereitstellt, ist in DE 10 2016 005 318 A1 offenbart. Das dort offenbarte System nutzt ein Bypass-Ventil, um je nach Ausfall eines Subsystems Steuerdrücke weiterzuleiten, um so den jeweils elektrisch ausgefallenen Kreis wenigstens pneumatisch zu versorgen. Auch hierdurch wird die Restverfügbarkeit erhöht. Ähnliche Systems sind in DE 10 2016 010 462 A1 und in DE 10 2016 010 464 A1 offenbart.

Ferner offenbart DE 10 2016 010 463 A1 ein System und Verfahren, bei welchem Vorsteuerventile über ein Redundanzsignal elektronisch angesteuert werden, falls ein Ausfall oder ein Defekt bei der elektronischen Ansteuerung von Radbremsen des Bremssystems festgestellt wird. Das System versucht dabei, das Blockieren von Rädern zu verhindern.

Aus DE 10 2017 002 716, DE 10 2017 002 718, DE 10 2017 002 719 sowie DE 10 2017 002 721 sind Systeme bekannt, bei denen jeweils pneumatisch eine Redundanz erzeugt wird. Hierbei werden verschiedene ausgesteuerte Bremsdrücke, beispielsweise Vorderachs-, Hinterachs- oder Anhängerbremsdrücke genutzt, um diese ausgefallenen Systemen, wie beispielsweise dem Vorderachbremskreis, Hinterachsbremskreis, Parkbremskreis oder Anhängerbremskreis, als Redundanzdruck bereitzustellen. Auf diese Weise wird eine untergelagerte pneumatische Redundanzebene erzeugt, sodass ebenfalls eine hohe Restverfügbarkeit erreicht wird.

Darüber hinaus existieren auch Systeme, die den Anhänger mit einbeziehen, wie beispielsweise in DE 10 2016 010 461 A1 offenbart.

DE 10 2017 003782 A1 zeigt ein Verfahren zum Überwachen einer Umsetzung einer automatisiert angeforderten Assistenz-Bremsvorgabe durch ein Bremssystem, insbesondere ABS-Bremssystem, mit mindestens den folgenden Schritten:- Erfassen, ob eine automatisiert angeforderte Assistenz-Bremsvorgabe vorliegt; - Erfassen einer Ist-Dynamikgröße, wobei die Ist-Dynamikgröße eine Raddynamik zumindest eines Rades des Fahrzeuges und/oder des Anhängers charakterisiert, wobei die Ist-Dynamikgröße einem Rad zugeordnet wird, das infolge der automatisiert angeforderten Assistenz-Bremsvorgabe abgebremst werden soll;- Ermitteln einer Referenz-Dynamikgröße, wobei die Referenz-Dynamikgröße eine Fahrdynamik des gesamten Fahrzeuges und/oder des Anhängers charakterisiert;- Vergleichen der Ist-Dynamikgröße mit der Referenz-Dynamikgröße, wobei bei Vorliegen einer Assistenz-Bremsvorgabe eine fehlerfreie Umsetzung erkannt wird, wenn die Ist-Dynamikgröße unter Berücksichtigung einer Rausch-Abweichung zumindest zeitweise um eine Puls-Abweichung von der Referenz-Dynamikgröße abweicht und/oder eine fehlerhafte Umsetzung erkannt wird, wenn die Ist-Dynamikgröße von der Referenz-Dynamikgröße abweicht.

In diesem Kontext stellt sich die Erfindung die Aufgabe, ein bestehendes Bremssystem der eingangs genannten Art mit einer homogenen fehlertoleranten Schnittstelle für ein elektrifiziertes automatisiertes Bremsen auszustatten.

Diese Aufgabe wird gelöst, indem in dem elektrisch steuerbaren pneumatischen Bremssystem ein zweikanaliges Druckmodulatorsystem vorgesehen ist, welches zwischen dem Bremswertgeber und das Vorder- und Hinterachs-Relaisventil geschaltet ist, wobei das zweikanalige Druckmodulatorsystem dazu ausgebildet ist, ein elektronisches Bremsanforderungssignal von einer Einheit für autonomes Fahren zu empfangen und in Antwort hierauf den Vorderachs-Bremsanforderungsdruck und den Hinterachs-Bremsanforderungsdruck auszusteuern, und wobei das Druckmodulatorsystem ferner dazu ausgebildet ist, den ersten Vorderachs-Bremssteuerdruck und den ersten Hinterachs-Bremssteuerdruck zu empfangen und wenigstens in einem Fehlerfall einer elektronischen Komponente des Druckmodulatorsystems den Vorderachs-Bremsanforderungsdruck in Abhängigkeit von dem ersten Vorderachs-Bremssteuerdruck und/oder den Hinterachs-Bremsanforderungsdruck in Abhängigkeit von dem ersten Hinterachs-Bremssteuerdruck auszusteuern. Damit bildet das zweikanalige Druckmodulatorsystem sowohl für den Bremswertgeber als auch für die Einheit für autonomes Fahren eine Schnittstelle.

In dem hier beschriebenen elektrisch steuerbaren pneumatischen Bremssystem sind an der Vorder- und Hinterachse an der Stelle von Ein- oder Zweikanalmodulatoren nur Relaisventile, nämlich das Vorderachs-Relaisventil und das Hinterachs-Relaisventil, vorgesehen, die basierend auf einem empfangenen Steuerdruck, nämlich dem Vorderachs-Bremsanforderungsdruck bzw. dem Hinterachs-Bremsanforderungsdruck, entsprechende Bremsdrücke an Vorderachsbremsaktuatoren bzw. Hinterachsbremsaktuatoren aussteuern. In einem herkömmlichen Bremssystem, das an der Vorder- und Hinterachse pneumatisch betätigt ist, werden der Vorderachs-Bremsanforderungsdruck und der Hinterachs-Bremsanforderungsdruck mittels des manuell betätigbaren Bremswertgebers, der in der Regel ein Fußbremspedal ist, ausgesteuert. Erfindungsgemäß wird nun hierzwischen das zweikanalige Druckmodulatorsystem angeordnet, das dann die Aussteuerung des Hinterachs- und Vorderachs-Bremsanforderungsdrucks übernimmt, und von dem manuell betätigbaren Bremswertgeber dann den Vorderachs- und Hinterachs-Bremssteuerdruck empfängt, sodass das Druckmodulatorsystem diese Drücke verarbeiten kann, wenn elektronische Komponenten des Druckmodulatorsystems ausfallen. Hierdurch wird eine Redundanz erzielt, die eine hohe Restverfügbarkeit ermöglicht und gleichzeitig auf Komponenten von bestehenden Bremssystemen aufbaut.

Das zweikanalige Druckmodulatorsystem kann dabei teilintegriert oder vollintegriert sein, beispielsweise aus einer, zwei oder mehr Baueinheiten gebildet sein. Bevorzugt sind möglichst wenig verschiedene Komponenten vorgesehen, sodass die Montage und der Einbau in das Fahrzeug insgesamt vereinfacht ist. Dabei ist es aber auch wichtig darauf zu achten, dass Einbauraum effizient genutzt wird, sodass es auch Anwendungsfälle geben kann, in denen mehrere einzelne Komponenten bevorzugt sind, um die Unterbringung im Fahrzeug zu vereinfachen.

Gemäß der Auslegung des Bremssystems wird der Vorderachs-Bremsanforderungsdruck durch das Vorderachs-Relaisventil nur volumenverstärkt, um den Vorderachsbremsdruck bereitzustellen. Ebenso ist auch das Hinterachs-Relaisventil vorzugsweise dazu ausgebildet, den Hinterachs-Bremsanforderungsdruck nur volumenzuverstärken und dann als Hinterachsbremsdruck bereitzustellen. Sowohl das Vorderachs- als auch das Hinterachs-Relaisventil weisen keine eigene Intelligenz auf, sondern sind nur zur Volumenverstärkung der entsprechenden Steuerdrücke vorgesehen.

In einer ersten bevorzugten Ausführungsform ist das zweikanalige Druckmodulatorsystem dazu ausgebildet, den Vorderachs-Bremsanforderungsdruck in Abhängigkeit von dem ersten Vorderachs-Bremssteuerdruck und/oder den Hinterachs-Bremsanforderungsdruck in Abhängigkeit von dem ersten Hinterachs-Bremssteuerdruck dann auszusteuern, wenn wenigstens einer des ersten Vorderachs-Bremssteuerdrucks und des ersten Hinterachs-Bremssteuerdrucks einen höheren Bremsanforderungsdruck und/oder Hinterachs-Bremsanforderungsdruck veranlasst als der durch das elektronische Bremsanforderungssignal angeforderte Vorderachs-Bremsanforderungsdruck und/oder Hinterachs-Bremsanforderungsdruck. In dieser Ausführungsform werden also der erste Vorderachs-Bremssteuerdruck und der erste Hinterachs-Bremssteuerdruck nicht nur in einem Redundanzfall eingesetzt, wenn eine elektronische Komponente des zweikanaligen Druckmodulatorsystems einen Fehler aufweist, sondern auch für den Fall, dass diese einen höheren Vorderachs-Bremsanforderungsdruck oder Hinterachs-Bremsanforderungsdruck anfordern als das von der Einheit für autonomes Fahren bereitgestellte elektronische Bremsanforderungssignal. Der Fahrzeugführer ist also in der Lage, das von der Einheit für autonomes Fahren ausgesteuerte elektronische Bremsanforderungssignal manuell zu übersteuern und ein stärkeres Bremsen zu veranlassen als dies die Einheit für autonomes Fahren tun würde. Hierdurch kann die Sicherheit des elektronisch steuerbaren pneumatischen Bremssystems insgesamt verbessert werden und der Fahrer kann auf einfache Art und Weise in den Bremsvorgang eingreifen.

In einer bevorzugten Weiterbildung weist das zweikanalige Druckmodulatorsystem für einen ersten Kanal einen ersten Primärmodulator und einen ersten Sekundärmodulator auf, die pneumatisch in Reihe geschaltet sind, und für einen zweiten Kanal einen zweiten Primärmodulator und einen zweiten Sekundärmodulator, die wiederum pneumatisch in Reihe geschaltet sind. Die jeweiligen ersten und zweiten Primärmodulatoren können in dieser Ausführungsform dazu vorgesehen sein, in einem Betriebsfall das Bremssystem zu steuern, während die ersten und zweiten Sekundärmodulatoren im Wesentlichen für einen Redundanzfall vorgesehen sind, wenn ein Fehler in dem Bremssystem und/oder dem zweikanaligen Druckmodulatorsystem auftritt. Vorzugsweise sind die ersten und zweiten Primärmodulatoren jeweils pneumatisch stromabwärts der ersten und zweiten Sekundärmodulatoren angeordnet, das heißt, die ersten und zweiten Sekundärmodulatoren sind vorzugsweise pneumatisch zwischen dem Bremswertgeber und den ersten und zweiten Primärmodulatoren angeordnet.

Weiterhin ist vorzugsweise vorgesehen, dass der erste Primärmodulator eine erste elektronische Steuereinheit und der zweite Primärmodulator eine zweite elektronische Steuereinheit aufweist, die jeweils das elektronische Bremsanforderungssignal empfangen, wobei der erste Primärmodulator dazu ausgebildet ist, in Antwort auf den Empfang des elektronischen Bremsanforderungssignals den Vorderachs-Bremsanforderungsdruck auszusteuern und wobei der zweite Primärmodulator dazu ausgebildet ist, in Antwort auf den Empfang des elektronischen Bremsanforderungssignals den Hinterachs-Bremsanforderungsdruck auszusteuern. Genauer gesagt übernehmen diese Aufgabe die ersten und zweiten elektronischen Steuereinheiten, die jeweils das Bremsanforderungssignal umsetzen und Ventile der ersten und zweiten Primärmodulatoren derart steuern, dass der Vorderachs-Bremsanforderungsdruck bzw. Hinterachs-Bremsanforderungsdruck ausgesteuert werden. Die ersten und zweiten Sekundärmodulatoren weisen hingegen vorzugsweise keine eigene Intelligenz auf und werden direkt von einer Steuereinheit des Bremssystems, beispielsweise den ersten und zweiten Steuereinheiten, einer übergeordneten zentralen Steuereinheit, der Einheit für autonomes Fahren oder dergleichen gesteuert. Die ersten und zweiten Sekundärmodulatoren können auch rein pneumatisch ausgebildet sein, ohne elektrisch schaltbare Ventile.

Bevorzugt jedoch ist, dass der erste Sekundärmodulator ein oder mehrere erste elektromagnetisch schaltbare Sekundärventile aufweist, die elektrisch mit der zweiten elektronischen Steuereinheit verbunden sind, um von dieser Schaltsignale zu empfangen, und dass der zweite Sekundärmodulator ein oder mehrere zweite elektromagnetisch schaltbare Sekundärventile aufweist, die elektrisch mit der ersten elektronischen Steuereinheit verbunden sind, um von dieser Schaltsignale zu empfangen. Auf diese Weise wird eine Verschaltung zwischen den beiden Kanälen auf elektrische Weise realisiert. Die zweite elektronische Steuereinheit, die zum zweiten Primärmodulator des zweiten Kanals gehört, steuert den ersten Sekundärmodulator, der zum ersten Kanal gehört, und umgekehrt. Auf diese Weise lässt sich eine Redundanz noch besser abbilden. Ist beispielsweise in einem Fehlerfall die erste elektronische Steuereinheit des ersten Primärmodulators ausgefallen, ist es möglich, dass die zweite elektronische Steuereinheit des zweiten Primärmodulators dann den ersten Sekundärmodulator so schaltet, dass letztlich der Vorderachs-Bremsanforderungsdruck bzw. Hinterachs-Bremsanforderungsdruck ausgesteuert bleiben. Auch im umgekehrten Fall, wenn die erste elektronische Steuereinheit des ersten Primärmodulators ausfällt, kann die zweite elektronische Steuereinheit des zweiten Primärmodulators den ersten Sekundärmodulator steuern, um so weiterhin den Vorderachs-Bremsanforderungsdruck bzw. Hinterachs-Bremsanforderungsdruck auszusteuern und das Fahrzeug zu bremsen.

In einer weiteren bevorzugten Ausgestaltung ist vorgesehen, dass der erste Sekundärmodulator einen ersten Sekundär-Vorratsanschluss zum Empfangen von Vorratsdruck, einen ersten Sekundär-Redundanzanschluss zum Empfangen des ersten Vorderachs-Bremssteuerdrucks von dem Bremswertgeber und einen ersten Sekundär-Arbeitsanschluss zum Aussteuern eines zweiten Vorderachs-Bremssteuerdrucks an dem ersten Primärmodulator aufweist. In übereinstimmender Weise weist vorzugsweise auch der zweite Sekundärmodulator einen zweiten Sekundär-Vorratsanschluss zum Empfangen von Vorratsdruck, einen zweiten Sekundär-Redundanzanschluss zum Empfangen des ersten Hinterachs-Bremssteuerdrucks von dem Bremswertgeber und einen zweiten Sekundär-Arbeitsanschluss zum Aussteuern eines zweiten Hinterachs-Bremssteuerdrucks an dem zweiten Primärmodulator auf. Der erste Sekundär-Vorratsanschluss und der zweite Sekundär-Vorratsanschluss können an denselben Druckluftvorrat angeschlossen sein oder an zwei verschiedene Druckluftvorräte, die dann für einen Vorderachs- und einen Hinterachsbremskreis vorgesehen sind. Vorzugsweise ist der erste Sekundär-Vorratsanschluss mit einem Druckluftvorrat für den Vorderachsbremskreis und der zweite Sekundär-Vorratsanschluss mit einem Druckluftvorrat für einen Hinterachsbremskreis verbunden. Das Aussteuern des zweiten Vorderachs-Bremssteuerdrucks und des zweiten Hinterachs-Bremssteuerdrucks dient insbesondere dazu, in einem Redundanzfall, wenn die ersten bzw. zweiten elektronischen Steuereinheiten der ersten und zweiten Primärmodulatoren ausfallen, diese pneumatisch zu steuern.

Besonders bevorzugt sind die ersten und zweiten Sekundär-Redundanzanschlüsse im Normalbetrieb offen zum Bremswertgeber. Üblicherweise ist vorgesehen, dass Redundanzanschlüsse an Modulatoren durch ein Schaltventil absperrbar sind, sodass der dort ausgesteuerte Druck nicht weiterverarbeitet wird. Gemäß der hier beschriebenen Ausführungsform allerdings sind die ersten und zweiten Sekundär-Redundanzanschlüsse im Normalbetrieb offen und empfangen vorzugsweise den vom Bremswertgeber ausgesteuerten Druck, das heißt, der erste Sekundär-Redundanzanschluss empfängt dauerhaft den ersten Vorderachs-Bremssteuerdruck und der zweite Sekundär-Redundanzanschluss empfängt dauerhaft den ersten Hinterachs-Bremssteuerdruck. Auf diese Weise kann eine "heiße Redundanz" ausgebildet werden, die ein Übersteuern des Bremsdrucks, der durch das elektronische Bremsanforderungssignal angefordert wird, zulässt. Die Verarbeitung des ersten Vorderachs-Bremssteuerdrucks und des ersten Hinterachs-Bremssteuerdrucks erfolgt demnach auch im Normalbetrieb und nicht erst dann, wenn ein Redundanzfall, also ein Fehler in dem Bremssystem, aufgetreten ist.

In einer weiteren bevorzugten Ausgestaltung ist vorgesehen, dass der erste Primärmodulator einen ersten Primär-Vorratsanschluss zum Empfangen von Vorratsdruck, einen ersten Primär-Redundanzanschluss zum Empfangen des zweiten Vorderachs-Bremssteuerdrucks und einen ersten Primär-Arbeitsanschluss zum Aussteuern des Vorderachs-Bremsanforderungsdrucks an dem Vorderachs-Relaisventil aufweist. In übereinstimmender Weise weist vorzugsweise auch der zweite Primärmodulator einen zweiten Primär-Vorratsanschluss zum Empfangen von Vorratsdruck, einen zweiten Primär-Redundanzanschluss zum Empfangen des zweiten Hinterachs-Bremssteuerdrucks und einen zweiten Primär-Arbeitsanschluss zum Aussteuern des Hinterachs-Bremsanforderungsdrucks an dem Hinterachs-Relaisventil auf. Der erste Primär-Vorratsanschluss ist vorzugsweise mit einem ersten Druckluftvorrat verbunden, und der zweite Primär-Vorratsanschluss ist vorzugsweise mit einem zweiten Druckluftvorrat verbunden. Der erste Druckluftvorrat ist vorzugsweise für die Vorderachse und einen Vorderachsbremskreis vorgesehen, während der zweite Druckluftvorrat für die Hinterachse bzw. den Hinterachsbremskreis vorgesehen ist. Es kann aber auch vorgesehen sein, dass sowohl der erste Primär-Vorratsanschluss als auch der zweite Primär-Vorratsanschluss an demselben Druckluftvorrat angeschlossen sind. Zudem sind Ausführungsformen bevorzugt, in denen der erste Primär-Redundanzanschluss nicht den zweiten Vorderachs-Bremssteuerdruck empfängt, sondern den ersten Vorderachs-Bremssteuerdruck, und der zweite Primär-Redundanzanschluss nicht den zweiten Hinterachs-Bremssteuerdruck, sondern den ersten Hinterachs-Bremssteuerdruck empfängt. In diesen Fällen sind die ersten und zweiten Primärmodulatoren direkt mit dem Bremswertgeber verbunden, ohne pneumatische Zwischenschaltung der ersten und zweiten Sekundärmodulatoren. Ferner ist es auch denkbar, dass der erste Primärmodulator den zweiten Hinterachs-Bremssteuerdruck an seinem ersten Primär-Redundanzanschluss empfängt, und der zweite Primärmodulator den zweiten Vorderachs-Bremssteuerdruck an seinem zweiten Primär-Redundanzanschluss empfängt. Auf diese Weise wird eine weitere Überkreuzschaltung der Modulatoren erreicht, wobei in einem solchen Fall eine Kreistrennung nicht mehr vollständig abgebildet werden kann.

Vorzugsweise ist ferner vorgesehen, dass der erste Primärmodulator den zweiten Vorderachs-Bremssteuerdruck aussperrt, wenn in Antwort auf diesen ein geringerer Vorderachs-Bremsanforderungsdruck ausgesteuert wird als der durch das elektronische Bremsanforderungssignal angeforderte Vorderachs-Bremsanforderungsdruck. Gleichzeitig ist vorzugsweise ferner vorgesehen, dass der zweite Primärmodulator den zweiten Hinterachs-Bremssteuerdruck aussperrt, wenn in Antwort auf diesen ein geringerer Hinterachs-Bremsanforderungsdruck ausgesteuert wird als der durch das elektronische Bremsanforderungssignal angeforderte Hinterachs-Bremsanforderungsdruck. Demnach ist vorgesehen, dass die Vorderachs- und Hinterachs-Bremssteuerdrücke, die von den ersten und zweiten Sekundärmodulatoren bereitgestellt werden, an den Primärmodulatoren nur dann ausgesperrt werden, wenn das elektronische Bremsanforderungssignal einen höheren Bremsdruck anfordert als der durch die ersten und zweiten Sekundärmodulatoren, also letztlich durch den manuellen Bremswertgeber angeforderte Bremsdruck. Das heißt, im Ergebnis wird jeweils das Bremsanforderungssignal, entweder das elektronische Bremsanforderungssignal oder die von dem manuell betätigbaren Bremswertgeber angeforderten Drücke verwendet, die zu einem höheren Bremsdruck führen. Hierdurch kann die Sicherheit des Bremssystems insgesamt verbessert werden. Durch das Aussperren des niedrigen Drucks wird dann sichergestellt, dass keine Dopplung auftritt, die zu einem ungewollten Blockieren von Rädern oder Achsen führen kann.

Vorzugsweise ist weiterhin vorgesehen, dass der erste Primärmodulator einen ersten Primärdrucksensor aufweist, der dem ersten Primär-Redundanzanschluss nachgeschaltet ist, um den an diesem ersten Primär-Redundanzanschluss anliegenden Druck zu erfassen und ein entsprechendes erstes Drucksignal an der ersten elektronischen Steuereinheit bereitzustellen. Darüber hinaus weist der zweite Primärmodulator vorzugsweise einen zweiten Primärdrucksensor auf, der dem zweiten Primär-Redundanzanschluss nachgeschaltet ist, um den an diesem zweiten Primär-Redundanzanschluss anliegenden Druck zu erfassen und ein entsprechendes zweites Drucksignal an der zweiten elektronischen Steuereinheit bereitzustellen. Die ersten und zweiten Drucksignale können dazu verwendet werden, zu messen wie hoch der Druck ist, der von dem manuell betätigbaren Bremswertgeber über die ersten und zweiten Sekundärmodulatoren an den ersten und zweiten Primärmodulatoren ausgesteuert wird. Die elektronischen Steuereinheiten der Primärmodulatoren können dann basierend auf den ersten und zweiten Drucksignalen entscheiden, ob der von dem manuellen Bremswertgeber angeforderte Bremsdruck höher ist als derjenige, der von dem elektronischen Bremsanforderungssignal von der Einheit für autonomes Fahren angefordert wird. In Abhängigkeit davon, wie hoch der an den ersten und zweiten Primärredundanzanschlüssen anliegende Druck ist, können dann die ersten und zweiten elektronischen Steuereinheiten der ersten und zweiten Primärmodulatoren den jeweiligen Primärredundanzanschluss sperren, um eine Druckaussteuerung zu verhindern.

Darüber hinaus ist bevorzugt, dass das elektronisch steuerbare pneumatische Bremssystem einen ersten Bremswunschdrucksensor zum Erfassen des ersten Vorderachs-Bremssteuerdrucks und einen zweiten Bremswunschdrucksensor zum Erfassen des ersten Hinterachs-Bremssteuerdrucks aufweist. Diese ersten und zweiten Bremswunschdrucksensoren sind vorzugsweise pneumatisch zwischen dem Bremswertgeber und die jeweiligen ersten und zweiten Sekundärmodulatoren geschaltet, um den von dem Bremswertgeber ausgesteuerten ersten Vorderachs-Bremssteuerdruck bzw. ersten Hinterachs-Bremssteuerdruck zu erfassen. Auch hierüber kann eine übergeordnete elektronische Steuereinheit, oder die ersten und zweiten elektronischen Steuereinheiten der ersten und zweiten Primärmodulatoren entscheiden, ob der von dem Bremswertgeber oder der von der Einheit für autonomes Fahren mittels des elektronischen Bremsanforderungssignals angeforderte Bremsdruck höher ist.

Gemäß einer weiteren bevorzugten Ausführungsform ist vorgesehen, dass der erste Bremswunschdrucksensor ein drittes Drucksignal an der zweiten elektronischen Steuereinheit bereitstellt und der zweite Bremswunschdrucksensor ein viertes Drucksignal an der ersten elektronischen Steuereinheit bereitstellt. Auf diese Weise erhält die erste elektronische Steuereinheit Informationen darüber, wie hoch der erste Hinterachs-Bremssteuerdruck ist, der von dem Bremswertgeber für den zweiten Kanal ausgesteuert wird. In umgekehrter Weise empfängt auch die zweite elektronische Steuereinheit Informationen darüber, wie hoch der erste Vorderachs-Bremssteuerdruck ist, der von dem Bremswertgeber an den ersten Kanal ausgesteuert wird. Dies ist besonders dann bevorzugt, wenn beispielsweise eine der elektronischen Steuereinheiten ausfällt. Fällt beispielsweise die zweite elektronische Steuereinheit aus, empfängt die erste elektronische Steuereinheit Informationen darüber, wie hoch der von dem Fahrzeugführer mittels des Bremswertgebers ausgesteuerte erste Hinterachs-Bremssteuerdruck ist, sodass die erste elektronische Steuereinheit in diesem Fall den zweiten Sekundärmodulator elektronisch steuern kann, um über diesen eine elektrische Aussteuerung des Hinterachsbremsdrucks zu erreichen. In umgekehrter Weise gilt das Entsprechende. Auf diese Weise kann also eine weitere elektronische Redundanz erzeugt werden.

In einem zweiten Aspekt der Erfindung wird die eingangs genannte Aufgabe gelöst durch ein Fahrzeug, insbesondere ein Nutzfahrzeug, mit einem elektronisch steuerbaren pneumatischen Bremssystem nach einer der vorstehend beschriebenen Ausführungsformen eines elektronisch steuerbaren pneumatischen Bremssystems gemäß dem ersten Aspekt der Erfindung. Es soll verstanden werden, dass das das elektronisch steuerbare pneumatische Bremssystem gemäß dem ersten Aspekt der Erfindung sowie das Fahrzeug gemäß dem zweiten Aspekt der Erfindung gleiche und ähnliche Unteraspekte aufweisen, wie sie insbesondere in den abhängigen Ansprüchen niedergelegt sind. Insofern wird vollumfänglich auf die obige Beschreibung Bezug genommen.

Ausführungsformen der Erfindung werden nun nachfolgend anhand der Zeichnungen beschrieben. Diese sollen die Ausführungsformen nicht notwendigerweise maßstäblich darstellen, vielmehr sind die Zeichnungen, wenn dies zur Erläuterung dienlich ist, in schematisierter und/oder leicht verzerrter Form ausgeführt. Im Hinblick auf Ergänzungen der aus den Zeichnungen unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, in den Zeichnungen sowie in den Ansprüchen offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus zumindest zwei der in der Beschreibung, den Zeichnungen und/oder den Ansprüchen offenbarten Merkmale. Die allgemeine Idee der Erfindung ist nicht beschränkt auf die exakte Form oder das Detail der im Folgenden gezeigten und beschriebenen bevorzugten Ausführungsformen oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Weitere Vorteile, Merkmale und Einzelheiten der Erfindung ergeben sich aus der nachfolgenden Beschreibung der bevorzugten Ausführungsformen sowie anhand der Zeichnungen; diese zeigen in:
- Figur 1: ein elektrisch steuerbares pneumatisches Bremssystem gemäß dem Stand der Technik;
- Figur 2: ein elektrisch steuerbares pneumatisches Bremssystem gemäß einem Ausführungsbeispiel der Erfindung;
- Figur 3: eine Darstellung eines zweikanaligen Druckmodulatorsystems;
- Figur 4: eine Detaildarstellung eines Teils des zweikanaligen Druckmodulatorsystems; und
- Figur 5: eine zweite Detaildarstellung des zweikanaligen Druckmodulatorsystems.

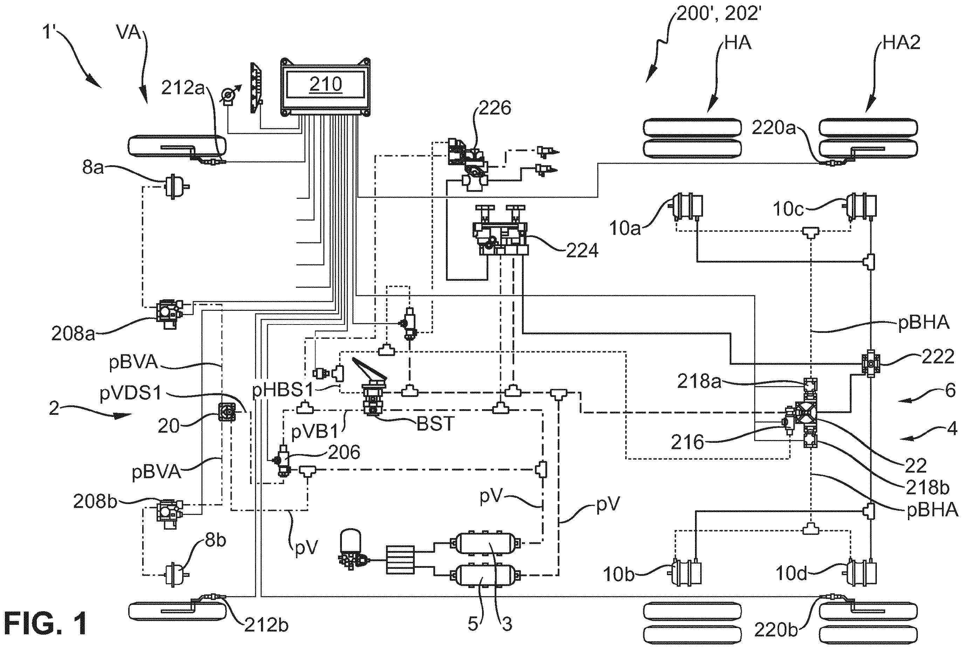

Figur 1 zeigt zunächst ein pneumatisches Bremssystem 1' gemäß dem Stand der Technik. Das Bremssystem 1' umfasst einen Vorderachsbremskreis 2 für eine Vorderachse VA sowie einen Hinterachsbremskreis 4 für eine erste Hinterachse HA und eine zweite Hinterachse HA2. Für die Hinterachsen HA, HA2 ist ferner ein Parkbremskreis 6 vorgesehen. Der Vorderachsbremskreis 2 wird aus einem ersten Druckluftvorrat 3 gespeist, der Hinterachsbremskreis 4 aus einem zweiten Druckluftvorrat 5. Sowohl der erste Druckluftvorrat 3 als auch der zweite Druckluftvorrat 5 stellen einen Vorratsdruck pV bereit. Auch der Parkbremskreis 6 wird durch den zweiten Druckluftvorrat 5 versorgt. An der Vorderachse VA sind erste und zweite Vorderachsbremsaktuatoren 8a, 8b vorgesehen und an der ersten und zweiten Hinterachse HA, HA2 sind insgesamt vier Hinterachsbremsaktuatoren 10a, 10b, 10c, 10d vorgesehen. Die Hinterachsbremsaktuatoren 10a - 10d sind alle als sogenannte Tristop-Bremszylinder ausgebildet und können sowohl als Betriebsbremsen als auch als Feststellbremsen agieren, indem sie einen Federspeicherbremszylinder aufweisen.

Das pneumatische Bremssystem 1' wird in der vorliegenden Ausführungsform rein pneumatisch gesteuert. Dazu ist ein Bremswertgeber BST vorgesehen, der sowohl mit dem ersten Druckluftvorrat 3 als auch mit dem zweiten Druckluftvorrat 5 verbunden ist. Der Bremswertgeber BST ist als sogenannter 2P-Bremswertgeber ausgebildet und weist zwei pneumatische Ausgänge aber keinen elektrischen Ausgang auf. An einem ersten Ausgang stellt der Bremswertgeber BST bei Betätigung einen ersten Vorderachs-Bremssteuerdruck pVBS1 und an einem zweiten Anschluss einen ersten Hinterachs-Bremssteuerdruck pHBS1 bereit. Der erste Vorderachs-Bremssteuerdruck pVBS1 wird dann über ein Vorderachs-3/2-Wege-Ventil 206 an einem Vorderachs-Relaisventil 20 bereitgestellt, welches dann den ersten Vorderachs-Bremssteuerdruck volumenverstärkt und basierend hierauf einen Vorderachsbremsdruck pBVA für die ersten und zweiten Vorderachsbremsaktuatoren 8a, 8b aussteuert. Um hier eine radgerechte Bremsung zu erreichen, sind zwischen dem Vorderachs-Relaisventil 20 und den ersten bzw. zweiten Vorderachsbremsaktuatoren 8a, 8b erste und zweite Vorderachs-ABS-Ventile 208a, 208b vorgesehen, die elektrisch mit einem Zentralmodul 210 verbunden sind, um so von diesem geschaltet zu werden. Das Zentralmodul 210 ist darüber hinaus in bekannter Weise mit Radsensoren 212a, 212b an der Vorderachse VA verbunden.

Die Hinterachsen HA, HA2 werden in ähnlicher Weise gesteuert. Hierzu wird der erste Hinterachs-Bremssteuerdruck pHBS1 über ein Hinterachs-3/2-WegeVentil 216 an einem Hinterachs-Relaisventil 220 bereitgestellt, das den ersten Hinterachs-Bremssteuerdruck pHBS1 volumenverstärkt und als Hinterachsbremsdruck pBHA an den ersten und zweiten Hinterachsen HA, HA2 aussteuert. Wiederum sind wie bei der Vorderachse an der Hinterachse HA, HA2 Hinterachs-ABS-Ventile 218a, 218b vorgesehen, sodass ein Blockieren einzelner Räder an den Hinterachsen HA, HA2 verhindert werden kann. In bekannter Weise sind auch an der zweiten Hinterachse HA2 erste und zweite Raddrehzahlsensoren 220a, 220b vorgesehen, die wiederum mit dem Zentralmodul 210 verbunden sind.

Die weiteren in Figur 1 zu sehenden Elemente, wie insbesondere das Parkbremsventil 222, das Push-Pull-Ventil 224 sowie das Anhängersteuerventil 226 sind im Rahmen der im Folgenden beschriebenen Erfindung nicht weiter relevant, sodass sie hier nicht im Detail beschrieben werden. Sie verdeutlichen lediglich, dass die hierin beschriebene Erfindung sowohl für Fahrzeuge 200 mit und ohne Anhängervorbereitung vorgesehen sein kann als auch für Fahrzeuge 200, die für den europäischen als auch für den US-Markt vorbereitet sind.

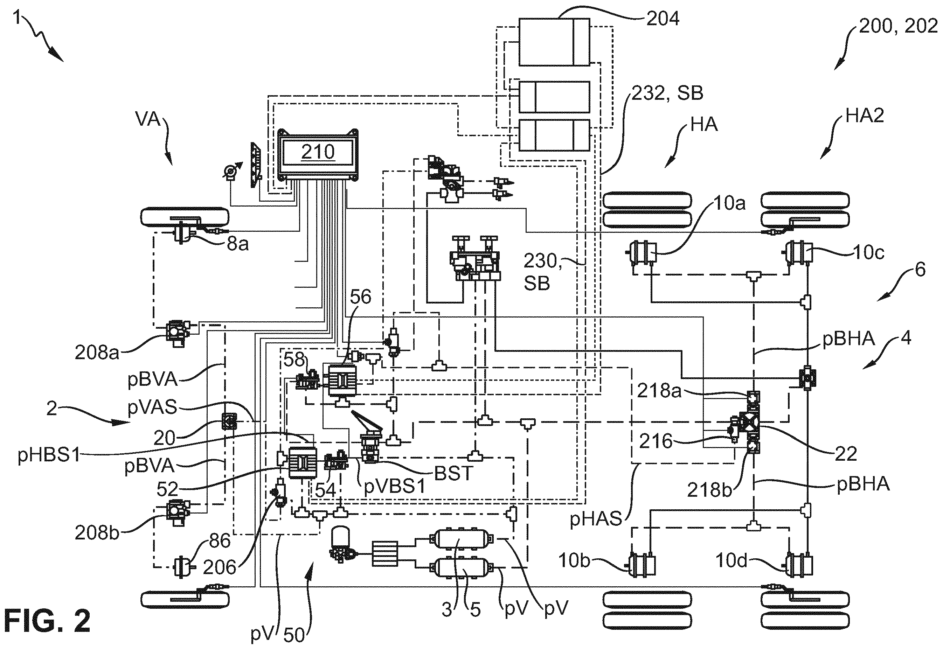

Figur 2 zeigt nun ein erstes Ausführungsbeispiel eines elektrisch steuerbaren pneumatischen Bremssystems 1, das basierend auf dem pneumatisch steuerbaren Bremssystem 1 ' gemäß Figur 1 aufgebaut wurde. Grundsätzlich verfügt es zunächst über sämtliche Elemente, die auch bereits in dem pneumatisch steuerbaren Bremssystem 1' gemäß Figur 1 vorgesehen waren. Insofern wird vollumfänglich auf die obige Beschreibung Bezug genommen. Im Folgenden werden insbesondere die Unterschiede zum pneumatisch steuerbaren Bremssystem 1' gemäß dem Stand der Technik beschrieben.

Das elektrisch steuerbare pneumatische Bremssystem 1 ist gemäß der Erfindung mit einem zweikanaligen Druckmodulatorsystem 50 ausgestattet, welches hier zwischen den Bremswertgeber BST und jeweils das Vorder- und Hinterachs-Relaisventil 20, 22 geschaltet ist. Das zweikanalige Druckmodulatorsystem ist über einen ersten Bus 230 und einen zweiten Bus 232 mit einer Einheit für autonomes Fahren 204 verbunden und empfängt von dieser ein elektronisches Bremsanforderungssignal SB. Das zweikanalige Druckmodulatorsystem 50 empfängt ferner den Vorratsdruck pV. Dazu ist das zweikanalige Druckmodulatorsystem 50 sowohl mit dem ersten Druckluftvorrat 3 als auch mit den zweiten Druckluftvorrat 5 verbunden. Das zweikanalige Druckmodulatorsystem 50 ist dazu ausgebildet, basierend auf dem empfangenen elektronischen Bremsanforderungssignal SB einen Vorderachs-Bremsanforderungsdruck pVAS und einen Hinterachs-Bremsanforderungsdruck pHAS auszusteuern. Der Vorderachs-Bremsanforderungsdruck pVAS wird in dem Ausführungsbeispiel gemäß Figur 2 dem Vorderachs-Relaisventil 20 zugeführt, welches diesen volumenverstärkt und basierend hierauf den Vorderachsbremsdruck pBVA aussteuert. Der Vorderachs-Bremsanforderungsdruck pVAS wird also von dem Vorderachs-Relaisventil 20 so verarbeitet, wie dies in dem pneumatisch steuerbaren Bremssystem 1' gemäß Figur 1 mit dem ersten Vorderachs-Bremssteuerdruck pVBS1 der Fall war. Anstelle des ersten Vorderachs-Bremssteuerdrucks pVBS1 wird also dem Vorderachs-Relaisventil 20 gemäß der Erfindung der Vorderachs-Bremsanforderungsdruck pVAS bereitgestellt, der von dem zweikanaligen Druckmodulatorsystem 50 ausgesteuert wird. In entsprechender Weise steuert das zweikanalige Druckmodulatorsystem 50 auch den Hinterachs-Bremsanforderungsdruck pHAS an dem Hinterachs-Relaisventil 220 aus, das diesen volumenverstärkt und als Hinterachsbremsdruck pBHA an den Hinterachsen HA, HA2 bereitstellt. Dies erfolgt wie auch grundsätzlich in Bezug auf Figur 1 beschrieben über das Vorderachs-3/2-WegeVentil 206 und das Hinterachs-3/2-Wege-Ventil 216, wobei diese beiden für die Erfindung nicht zwingend erforderlich sind.

Darüber hinaus empfängt das zweikanalige Druckmodulatorsystem 50 auch den ersten Vorderachs-Bremssteuerdruck pVBS1 und den ersten Hinterachs-Bremssteuerdruck pHBS1 vom Bremswertgeber BST. Diese beiden Drücke, nämlich der erste Vorderachs-Bremssteuerdruck pVBS1 und der erste Hinterachs-Bremssteuerdruck pHBS1, werden von dem zweikanaligen Druckmodulatorsystem 50 verarbeitet. Insbesondere ist vorgesehen, dass das zweikanalige Druckmodulatorsystem 50 den ersten Vorderachs-Bremssteuerdruck pVBS1 sowie den ersten Hinterachs-Bremssteuerdruck pHBS1 dazu verwendet, in einem Redundanzfall, wenn ein Fehler in einer elektronischen Komponente des zweikanaligen Druckmodulatorsystems 50 auftritt, den Vorderachs-Bremsanforderungsdruck pVAS und/oder den Hinterachs-Bremsanforderungsdruck pHAS redundant auszusteuern.

Neben der Funktion, den von dem Bremswertgeber BST ausgesteuerten ersten Vorderachs-Bremssteuerdruck pVBS1 und ersten Hinterachs-Bremssteuerdruck pHBS1 in einem Redundanzfall zu verwenden, hat das zweikanalige Druckmodulatorsystem 50 vorzugsweise auch die Funktionalität, diese beiden Drücke auch dann zu verwenden, wenn sie einen höheren Vorderachs-Bremsanforderungsdruck pVAS bzw. einen höheren Hinterachs-Bremsanforderungsdruck pHAS auslösen würden, als dies basierend auf dem elektronischen Bremsanforderungssignal SB der Fall wäre. Das heißt, das zweikanalige Druckmodulatorsystem 50 ist vorzugsweise in der Lage, ein Übersteuern des elektronischen Bremsanforderungssignals SB durch eine manuelle Bedienerinteraktion an dem Bremswertgeber BST zuzulassen.

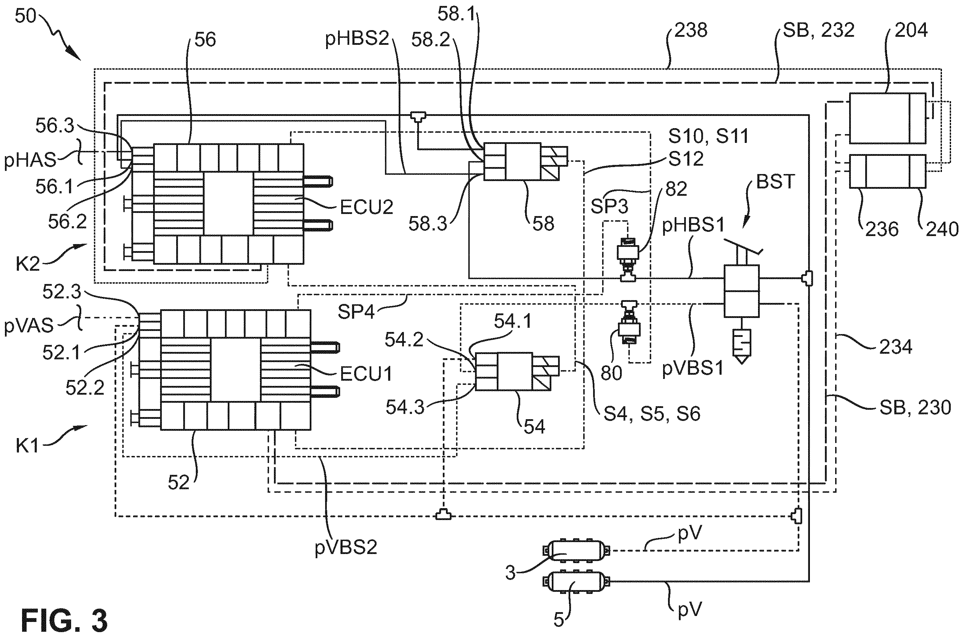

Im Detail ist das zweikanalige Druckmodulatorsystem 50 gemäß dem hier gezeigten Ausführungsbeispiel aus vier Bausteinen gebildet, nämlich einem ersten Primärmodulator 52, einem ersten Sekundärmodulator 54, einem zweiten Primärmodulator 56 und einem zweiten Sekundärmodulator 58. Die Arbeitsweise und der genaue Aufbau dieser einzelnen Komponenten wird nun in Bezug auf die Figuren 3 - 5 im Detail erläutert werden. Jeweils eine Kombination von Primär- und Sekundärmodulator sind für einen der zwei Kanäle des zweikanaligen Druckmodulatorsystems 50 vorgesehen. So ist die Kombination aus erstem Primärmodulator 52 und erstem Sekundärmodulator 54 für einen ersten Kanal K1 vorgesehen, der hier der Vorderachskanal ist, und die Kombination von zweitem Primärmodulator 56 mit zweitem Sekundärmodulator 58 ist für einen zweiten Kanal K2 vorgesehen, der hier der Hinterachskanal ist. Jedem Kanal K1, K2 ist auch ein Druckluftvorrat 3, 5 zugeordnet. Dem ersten Kanal K1 ist der erste Druckluftvorrat 3 zugeordnet und dem zweiten Kanal K2 der zweite Druckluftvorrat 5. Die Druckluftvorräte 3, 5 sind insgesamt kreisgetrennt zugeordnet.

In Figur 3 ist zu erkennen, dass der Bremswertgeber BST sowohl mit dem ersten Druckluftvorrat 3 als auch mit dem zweiten Druckluftvorrat 5 verbunden ist. Bei Betätigung des Bremswertgebers BST werden der erste Vorderachs-Bremssteuerdruck pVBS1 und der erste Hinterachs-Bremssteuerdruck pHBS1 ausgesteuert. Ferner ist in Figur 3 zu sehen, dass der erste Primärmodulator 52 mit dem ersten Druckluftvorrat 3 verbunden ist und von diesem Vorratsdruck pV empfängt. Ebenso ist der zweite Primärmodulator 56 mit dem zweiten Druckluftvorrat 5 verbunden und empfängt Vorratsdruck pV von diesem. Die ersten und zweiten Primärmodulatoren 52, 56 sind ferner über den ersten und zweiten Bus 230, 232 mit der Einheit für autonomes Fahren 204 verbunden und empfangen das elektronische Bremsanforderungssignal SB von dieser. Über eine erste Spannungsleitung 234 ist der erste Primärmodulator 52 mit einer ersten Spannungsquelle 236 verbunden und der zweite Primärmodulator 56 ist über eine zweite Spannungsleitung 238 mit einer zweiten Spannungsquelle 240 verbunden. Die ersten und zweiten Spannungsquellen 236, 240 sind getrennt, sodass die ersten und zweiten Primärmodulatoren 52, 56 von getrennten Spannungsquellen 236, 240 versorgt werden.

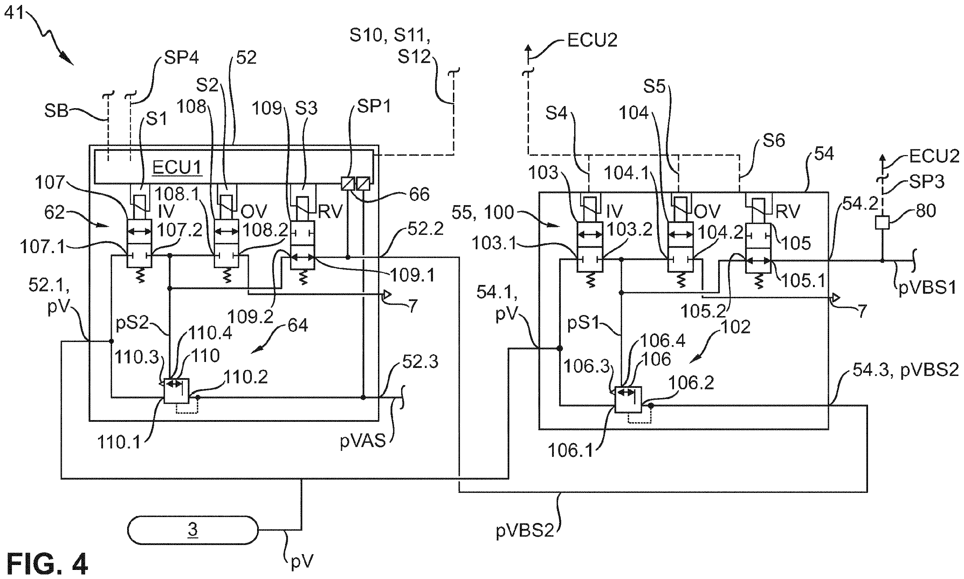

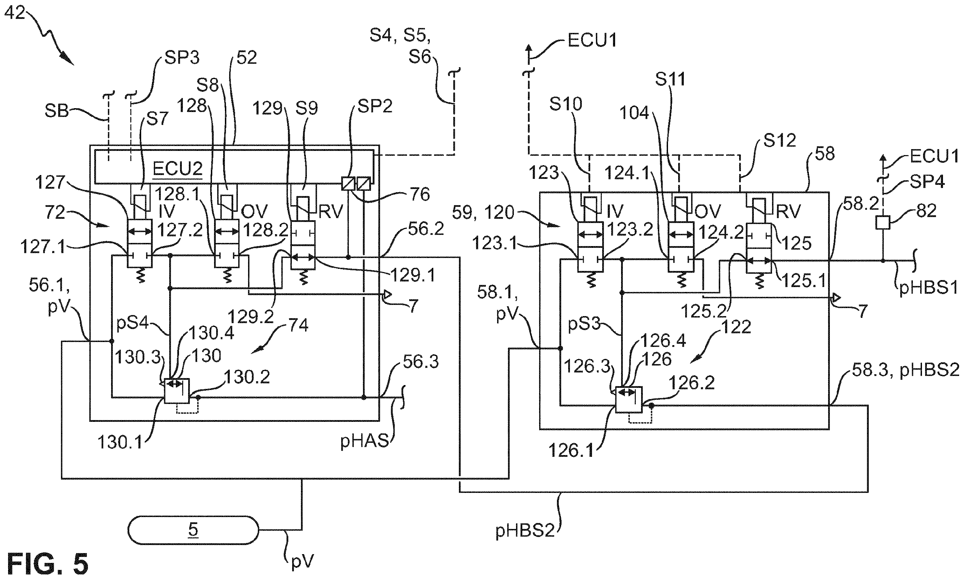

Der erste Primärmodulator 52 verfügt über eine erste elektronische Steuereinheit ECU1 und der zweite Primärmodulator 56 verfügt über eine zweite elektronische Steuereinheit ECU2. Die ersten und zweiten elektronischen Steuereinheiten ECU1, ECU2 sind dazu ausgebildet, das elektronische Bremsanforderungssignal SB in Schaltsignale umzusetzen, wie dies mit Bezug auf die Figuren 4 und 5 genauer erläutert werden wird. Basierend auf dem Empfang des elektronischen Bremsanforderungssignals SB steuert dann der erste Primärmodulator 52 einen Vorderachs-Bremsanforderungsdruck pVAS aus und der zweite Primärmodulator 56 steuert einen Hinterachs-Bremsanforderungsdruck pHAS aus. Genauer gesagt werden diese beiden Drücke an ersten und zweiten Primär-Arbeitsanschlüssen 52.3, 56.3 bereitgestellt. Der erste Primär-Arbeitsanschluss 52.3 ist (vgl. Figur 2) dann mit dem Vorderachs-3/2-WegeVentil 206 verbunden und hierüber wiederum mit einem Steueranschluss des Vorderachs-Relaisventils 20. Der erste Primär-Arbeitsanschluss 52.3 kann aber auch direkt mit dem entsprechenden Steueranschluss des Vorderachs-Relaisventils 20 verbunden sein. Ebenso ist der zweite Primär-Arbeitsanschluss 56.3 über das Hinterachs-3/2-Wege-Ventil 216 mit dem Hinterachs-Relaisventil 22 verbunden, genauer gesagt mit einem Steueranschluss von diesem. Ebenso kann der zweite Primär-Arbeitsanschluss 56.3 aber auch direkt mit dem Steueranschluss des Hinterachs-Relaisventils 22 verbunden sein.

Zwischen dem Bremswertgeber BST und den ersten und zweiten Primärmodulatoren 52, 56 sind gemäß diesem Ausführungsbeispiel erste und zweite Sekundärmodulatoren 54, 58 angeordnet. Der erste Sekundärmodulator 54 ist dabei dem ersten Kanal K1 zugeordnet und pneumatisch zwischen dem Bremswertegeber BST und dem ersten Primärmodulator 52 angeordnet, und der zweite Sekundärmodulator 58 ist dem zweiten Kanal K2 zugeordnet und pneumatisch zwischen dem Bremswertgeber BST und dem zweiten Primärmodulator 56 angeordnet. Der erste Sekundärmodulator 54 empfängt an einem ersten Sekundär-Vorratsanschluss 54.1 Vorratsdruck pV. Hierzu ist der erste Sekundärmodulator 54 mit seinem ersten Sekundär-Vorratsanschluss 54.1 mit dem ersten Druckluftvorrat 3 verbunden. Darüber hinaus ist der erste Sekundärmodulator 54 mit dem Bremswertgeber BST verbunden und empfängt von diesem den ersten Vorderachs-Bremssteuerdruck pVBS1. Dazu ist der Bremswertgeber BST mit einem ersten Sekundär-Redundanzanschluss 54.2 des ersten Sekundärmodulators 54 verbunden. Der erste Sekundärmodulator 54 ist dazu ausgebildet, den am ersten Sekundär-Redundanzanschluss 54.2 ausgesteuerten ersten Vorderachs-Bremssteuerdruck pVBS1 volumenzuverstärken und den volumenverstärkten Druck als zweiten Vorderachs-Bremssteuerdruck pVBS2 an einem ersten Sekundär-Arbeitsanschluss 54.3 des ersten Sekundärmodulators auszusteuern. Es ist aber auch denkbar, dass hier keine Volumenverstärkung stattfindet, sondern lediglich eine Weiterleitung. Hierzu benötigt der erste Sekundärmodulator 54 keine eigene Intelligenz. Gemäß dem in Figur 3 gezeigten Ausführungsbeispiel ist der erste Sekundärmodulator 54 ohne eigene elektronische Steuereinheit ausgebildet.

Der von dem ersten Sekundärmodulator 54 ausgesteuerte zweite Vorderachs-Bremssteuerdruck pVBS2 wird dann dem ersten Primärmodulator 52 bereitgestellt. Zu diesem Zweck ist der erste Sekundär-Arbeitsanschluss 54.3 mit einem ersten Primär-Redundanzanschluss 52.2 des ersten Primärmodulators 52 verbunden. Der erste Primärmodulator 52 ist dazu ausgebildet, den am ersten Primär-Redundanzanschluss 52.2 empfangenen zweiten Vorderachs-Bremssteuerdruck pVBS2 volumenzuverstärken oder weiterzuleiten und als Vorderachs-Bremsanforderungsdruck pVAS auszusteuern. Dies insbesondere in einem Fehlerfall der ersten elektronischen Steuereinheit ECU1 des ersten Primärmodulators 52, wenn diese das elektronische Bremsanforderungssignal SB der Einheit für autonomes Fahren 204 nicht oder nicht richtig verarbeiten kann. In diesem Fall kann der erste Primärmodulator 52 den von dem ersten Sekundärmodulator 54 ausgesteuerten zweiten Vorderachs-Bremssteuerdruck pVBS2 nutzen, um redundant den Vorderachs-Bremsanforderungsdruck pVAS auszusteuern. Das heißt, auch in einem Fall, in dem die erste elektronische Steuereinheit ECU1 das elektronische Bremsanforderungssignal SB nicht oder nicht richtig verarbeiten kann, kann der Vorderachs-Bremsanforderungsdruck pVAS dennoch ausgesteuert werden, um das Fahrzeug 200 in dieser Situation bremsen zu können.

Die Ausführungen, die oben zum ersten Kanal K1 gemacht wurden, gelten vorzugsweise entsprechend auch für den zweiten Kanal K2. In dem zweiten Kanal K2 ist der zweite Sekundärmodulator 58 ebenfalls mit Vorratsdruck pV versorgt und ist zu diesem Zweck mit einem zweiten Sekundär-Vorratsanschluss 58.1 mit dem zweiten Druckluftvorrat 5 verbunden. Darüber hinaus ist der zweite Sekundärmodulator 58 mit dem Bremswertgeber BST verbunden und empfängt von diesem den ersten Hinterachs-Bremssteuerdruck pHBS1. Zu diesem Zweck ist der zweite Sekundärmodulator 58 mit einem zweiten Sekundär-Redundanzanschluss 58.2 mit dem Bremswertgeber BST verbunden. Der zweite Sekundärmodulator 58 ist dazu ausgebildet, den an dem zweiten Sekundär-Redundanzanschluss 58.2 empfangenen ersten Hinterachs-Bremssteuerdruck pHBS1 volumenzuverstärken oder weiterzuleiten und an einem zweiten Sekundär-Arbeitsanschluss 58.3 als zweiten Hinterachs-Bremssteuerdruck pHBS2 bereitzustellen. Der zweite Primärmodulator 56 ist dazu ausgebildet, diesen zweiten Hinterachs-Bremssteuerdruck pHBS2 zu empfangen und weist dazu einen zweiten Primär-Redundanzanschluss 56.2 auf, der mit dem zweiten Sekundär-Arbeitsanschluss 58.3 verbunden ist und den zweiten Hinterachs-Bremssteuerdruck pHBS2 empfängt. Der zweite Primärmodulator 56 ist dazu ausgebildet, den zweiten Hinterachs-Bremssteuerdruck pHBS2 volumenzuverstärken oder weiterzuleiten und als Hinterachs-Bremsanforderungsdruck pHAS an dem zweiten Primär-Arbeitsanschluss 56.3 auszusteuern. Dies insbesondere dann, wenn die zweite elektronische Steuereinheit ECU2 des zweiten Primärmodulators 56 ausgefallen ist und der zweite Primärmodulator 56 das elektronische Bremsanforderungssignal SB nicht oder nicht richtig verarbeiten kann. In einem solchen Fall kann der zweite Primärmodulator 56 den Hinterachs-Bremsanforderungsdruck pHAS basierend auf dem zweiten Hinterachs-Bremssteuerdruck pHBS2 redundant aussteuern.

Der genaue Aufbau des zweikanaligen Druckmodulatorsystems 50, nämlich insbesondere des ersten und zweiten Primärmodulators 52, 56 und ersten und zweiten Sekundärmodulators 54, 58, wird nun mit Bezug auf die Figuren 4 und 5 im Detail erläutert. Figur 4 zeigt dabei den ersten Kanal K1 mit dem ersten Primärmodulator 52 und dem ersten Sekundärmodulator 54. Figur 5 illustriert dann dasselbe für den zweiten Kanal K2 mit dem zweiten Primärmodulator 56 und dem zweiten Sekundärmodulator 58.

Wie Figur 4 zu entnehmen, weist der erste Sekundärmodulator 54 mehrere erste elektromagnetisch schaltbare Sekundärventile 55 auf, die hier eine erste Sekundär-Vorsteuereinheit 100 bilden. Daneben weist der erste Sekundärmodulator 54 eine erste Sekundär-Hauptventileinheit 102 auf. Die erste Sekundär-Vorsteuereinheit 100 weist ein erstes Sekundär-Einlassventil 103, ein erstes Sekundär-Auslassventil 104 und ein erstes Sekundär-Redundanzventil 105 auf. Alle drei Ventile 103, 104, 105 sind hier als monostabile 2/2-Wegeventile ausgebildet. Es soll verstanden werden, dass dies nicht zwingend ist und insbesondere könnten auch das erste Sekundär-Einlassventil 103 und das erste Sekundär-Auslassventil 104 gemeinsam in ein 3/2-Wegeventil integriert dargestellt sein, das dann in grundsätzlich bekannter Weise als kombiniertes Einlass-Auslass-Ventil agiert.

Das erste Sekundär-Redundanzventil 105 ist monostabil und in der in Figur 4 gezeigten stromlosen Schaltstellung offen. Es weist einen ersten Sekundär-Redundanzventilanschluss 105.1 auf, der mit dem ersten Sekundär-Redundanzanschluss 54.2 verbunden ist und somit den an diesem ausgesteuerten ersten Vorderachs-Bremssteuerdruck pVBS1 empfängt. Ein zweiter Sekundär-Redundanzventilanschluss 105.2 ist mit der ersten Sekundär-Hauptventileinheit 102 verbunden und steuert den ersten Vorderachs-Bremssteuerdruck pVBS1 als ersten Steuerdruck pS1 aus, wenn das erste Sekundär-Redundanzventil 105 wie in Figur 4 gezeigt offen ist. Die erste Sekundär-Hauptventileinheit 102 ist hier als erstes Sekundär-Relaisventil 106 ausgebildet. Das erste Sekundär-Relaisventil 106 weist einen ersten Sekundär-Relaisventilvorratsanschluss 106.1 auf, der mit dem ersten Sekundär-Vorratsanschluss 54.1 verbunden ist und Vorratsdruck pV empfängt. Es weist ferner einen ersten Sekundär-Relaisventilarbeitsanschluss 106.2 auf, der mit dem ersten Sekundär-Arbeitsanschluss 54.3 verbunden ist, um an diesem den zweiten Vorderachs-Bremssteuerdruck pVBS2 auszusteuern. Das erste Sekundär-Relaisventil 106 weist zudem einen ersten Sekundär-Relaisventilentlüftungsanschluss 106.3 auf, der mit einer Entlüftung verbunden ist sowie einen ersten Sekundär-Relaisventilsteueranschluss 106.4, an dem der erste Steuerdruck pS1 ausgesteuert wird. Das erste Sekundär-Relaisventil 106 ist dazu ausgebildet, den am ersten Sekundär-Relaisventilsteueranschluss 106.4 ausgesteuerten ersten Steuerdruck pS1 volumenzuverstärken und als zweiten Vorderachs-Bremssteuerdruck pVBS2 bereitzustellen. Wird also der erste Vorderachs-Bremssteuerdruck pVBS1 über den ersten Sekundär-Redundanzanschluss 54.2 an dem ersten Sekundärmodulator 54 bereitgestellt, wird dieser über das offene erste Sekundär-Redundanzventil 105 an dem ersten Sekundär-Relaisventil 106 bereitgestellt, volumenverstärkt und als zweiter Vorderachs-Bremssteuerdruck pVBS2 bereitgestellt, und zwar an dem ersten Primär-Redundanzanschluss 52.2, der mit dem ersten Sekundär-Arbeitsanschluss 54,3 verbunden ist.

Der erste Primärmodulator 52 weist wie oben bereits erwähnt eine erste elektronische Steuereinheit ECU1 auf, die eine Intelligenz des ersten Primärmodulators 52 bildet und das elektronische Bremsanforderungssignal SB empfängt und verarbeitet. Der erste Primärmodulator 52 weist in seinem Inneren eine erste Primär-Vorsteuereinheit 62 und eine erste Primär-Hauptventileinheit 64 auf. Insgesamt sind diese identisch zu der ersten Sekundär-Vorsteuereinheit 100 und der ersten Sekundär-Hauptventileinheit 102 ausgebildet. Insofern weist die erste Primär-Vorsteuereinheit 62 ein erstes Primär-Einlassventil 107, ein erstes Primär-Auslassventil 108 und ein erstes Primär-Redundanzventil 109 auf. Das erste Primär-Redundanzventil 109 ist hier wiederum als monostabiles 2/2-Wegeventil ausgebildet, das stromlos in einem offenen Schaltzustand ist, wie in Figur 4 gezeigt. Auch das erste Primär-Einlassventil 107 und das erste Primär-Auslassventil 108 sind als monostabile 2/2-Wegeventile gezeigt, die allerdings stromlos geschlossen sind. Wiederum soll verstanden werden, dass das erste Primär-Einlassventil 107 und das erste Primär-Auslassventil 108 auch gemeinsam in ein 3/2-Wegeventil integriert sein können. Das erste Primär-Einlassventil 107 weist einen ersten Primär-Einlassventilanschluss 107.1 auf, der mit dem ersten Primär-Vorratsanschluss 52.1 verbunden ist und Vorratsdruck pV empfängt. Ein zweiter Primär-Einlassventilanschluss 107.2 ist mit der ersten Primär-Hauptventileinheit 64 verbunden, genauer gesagt mit dem ersten Primär-Relaisventil 110. Das erste Primär-Einlassventil 107 kann durch Bereitstellen eines ersten Schaltsignals S1 durch die erste elektronische Steuereinheit ECU1 von der geschlossenen in Figur 4 gezeigten Schaltstellung in die offene in Figur 4 nicht gezeigte Schaltstellung geschaltet werden, sodass der Vorratsdruck pV durch das erste Primär-Einlassventil 107 durchgesteuert wird und als zweiter Steuerdruck pS2 an dem ersten Primär-Relaisventil 110 bereitgestellt wird. Das erste Primär-Relaisventil 110 weist einen ersten Primär-Relaisventilvorratsanschluss 110.1 auf, der mit dem ersten Primär-Vorratsanschluss 52.1 verbunden ist und Vorratsdruck pV empfängt. Das erste Primär-Relaisventil 110 weist darüber hinaus einen ersten Primär-Relaisventilarbeitsanschluss 110.2 auf, der mit dem ersten Primär-Arbeitsanschluss 52.3 zum Aussteuern des Vorderachs-Bremsanforderungsdrucks pVAS verbunden ist. Ferner weist das erste Primär-Relaisventil 110 einen ersten Primär-Relaisventilentlüftungsanschluss 103 auf, der mit einer Entlüftung verbunden ist, sowie einen ersten Primär-Relaisventilsteueranschluss 110.4, der mit der ersten Primär-Vorsteuereinheit 62 verbunden ist und den zweiten Steuerdruck pS2 empfängt. Das erste Primär-Relaisventil 110 ist dazu ausgebildet, den empfangenen zweiten Steuerdruck pS2 volumenzuverstärken und als Vorderachs-Bremsanforderungsdruck pVAS an dem ersten Primär-Arbeitsanschluss 52.3 bereitzustellen, von dem aus dieser dann an dem Vorderachs-Relaisventil 20 zum Bilden des Vorderachsbremsdrucks pBVA ausgesteuert wird. Zum Entlüften des zweiten Steuerdrucks pS2 bzw. des ersten Primär-Relaisventilsteueranschlusses 110.4 ist das erste Primär-Auslassventil 108 vorgesehen. Das erste Primär-Auslassventil 108 weist einen ersten Primär-Auslassventilanschluss 108.1 auf, der mit dem ersten Primär-Relaisventilsteueranschluss 110.4 verbunden ist, und einen zweiten Primär-Auslassventilanschluss 108.2, der mit einer Entlüftung 7 verbunden ist. Das erste Primär-Auslassventil 108 lässt sich durch ein zweites Schaltsignal S2, das von der ersten elektronischen Steuereinheit ECU1 bereitgestellt wird, von der geschlossenen in Figur 4 gezeigten Schaltstellung in eine offene in Figur 4 nicht gezeigte Schaltstellung verbringen, sodass basierend auf dem zweiten Schaltsignal S2 der erste Primär-Relaisventilsteueranschluss 110.4 entlüftet werden kann. In diesem Fall wird dann kein Vorderachs-Bremsanforderungsdruck pVAS ausgesteuert. Die erste elektronische Steuereinheit ECU1 setzt also das elektronische Bremsanforderungssignal SB in das erste und zweite Schaltsignal S1, S2 um, um so in Übereinstimmung mit dem elektronischen Bremsanforderungssignal SB den Vorderachs-Bremsanforderungsdruck pVAS auszusteuern.

Wie in Figur 4 zu sehen, umfasst der erste Primärmodulator 52 auch einen ersten Primärdrucksensor 66, der hier zwischen dem ersten Primär-Redundanzanschluss 52.2 und dem ersten Primär-Redundanzventil 109 angeordnet ist und somit den am ersten Primär-Redundanzanschluss 52.2 ausgesteuerten zweiten Vorderachs-Bremssteuerdruck pVBS2 erfasst. Der erste Primärdrucksensor 66 stellt dann ein erstes Drucksignal SP1 an der ersten elektronischen Steuereinheit ECU1 bereit, welches den zweiten Vorderachs-Bremssteuerdruck pVBS2 repräsentiert. Die erste elektronische Steuereinheit ECU1 ist dazu ausgebildet, dieses erste Drucksignal SP1 zu verarbeiten. Hierbei ist vorgesehen, dass die erste elektronische Steuereinheit ECU1 das erste Primär-Redundanzventil 109 mittels des dritten Schaltsignals S3 schließt und somit den zweiten Vorderachs-Bremssteuerdruck pVBS2 aussperrt, wenn das erste Drucksignal SP1 anzeigt, dass der in Antwort auf den zweiten Vorderachs-Bremssteuerdruck pVBS2 ausgesteuerte Vorderachs-Bremsanforderungsdruck pVAS geringer wäre als der Vorderachs-Bremsanforderungsdruck pVAS, der basierend auf dem elektronischen Bremsanforderungssignal SB ausgesteuert werden würde. Das heißt, die erste elektronische Steuereinheit ECU1 entscheidet, ob der Vorderachs-Bremsanforderungsdruck pVAS basierend auf dem elektronischen Bremsanforderungssignal SB oder basierend auf dem zweiten Vorderachs-Bremssteuerdruck pVBS2 ausgesteuert wird, je nachdem, welcher von diesen einen höheren Vorderachs-Bremsanforderungsdruck pVAS verursachen würde. Diese Funktionalität kann auch als "heiße Redundanz" bezeichnet werden, da rein pneumatisch der Fahrzeugführer mit dem Bremswertgeber BST über den ersten Vorderachs-Bremssteuerdruck pVBS1 und den zweiten Vorderachs-Bremssteuerdruck pVBS2 den basierend auf dem elektronischen Bremsanforderungssignal SB ausgesteuerten Vorderachs-Bremsanforderungsdruck pVAS übersteuern kann, um eine stärkere Bremsung zu veranlassen. Solange allerdings der Fahrzeugführer mittels des Bremswertgebers BST nur einen geringeren Vorderachs-Bremsanforderungsdruck pVAS anfordern würde, schließt die erste elektronische Steuereinheit ECU1 das erste Primär-Redundanzventil 109 und sperrt so den zweiten Vorderachs-Bremssteuerdruck pVBS2 aus, sodass der Vorderachs-Bremsanforderungsdruck pVAS ausschließlich basierend auf dem elektronischen Bremsanforderungssignal SB ausgesteuert wird. Um diese Funktionalität umzusetzen ist das erste Sekundär-Redundanzventil 105 und/oder das erste Primär-Redundanzventil 109 vorzugsweise in einem Normalbetrieb des Fahrzeugs 200 offen.

Wie bereits erwähnt, sind der erste Kanal K1 und der zweite Kanal K2 im Wesentlichen identisch aufgebaut. Insofern umfasst der zweite Sekundärmodulator 58 zweite elektromagnetisch schaltbare Sekundärventile 59, die eine zweite Sekundär-Vorsteuereinheit 120 bilden. Neben der zweiten Sekundär-Vorsteuereinheit weist der zweite Sekundärmodulator 58 auch eine zweite Sekundär-Hauptventileinheit 122 auf. Die zweite Sekundär-Vorsteuereinheit 120 weist ein zweites Sekundär-Einlassventil 123, ein zweites Sekundär-Auslassventil 124 und ein zweites Sekundär-Redundanzventil 125 auf. Alle drei Ventile 123, 124, 125 sind wiederum als monostabile 2/2-Wege-Schaltventile ausgebildet. Wiederum ist es aber auch bevorzugt, das zweite Sekundär-Einlassventil 123 und das zweite Sekundär-Auslassventil 124 gemeinsam in einem 3/2-Wegeventil abzubilden. Das zweite Sekundär-Redundanzventil 125 weist einen dritten Sekundär-Redundanzventilanschluss 125.1 und einen vierten Sekundär-Redundanzventilanschluss 125.2 auf. Der dritte Sekundär-Redundanzventilanschluss 125.1 ist mit dem zweiten Sekundär-Redundanzanschluss 58.2 verbunden und empfängt von diesem den ersten Hinterachs-Bremssteuerdruck pHBS1. Das zweite Sekundär-Redundanzventil 125 ist stromlos offen und über den vierten Sekundär-Redundanzventilanschluss 125.2 mit der zweiten Sekundär-Hauptventileinheit 122 verbunden, um dort den ersten Hinterachs-Bremssteuerdruck pHBS1 als dritten Steuerdruck pS3 auszusteuern. Die zweite Sekundär-Hauptventileinheit 122 weist ein zweites Sekundär-Relaisventil 126 auf. Das zweite Sekundär-Relaisventil 126 weist einen zweiten Sekundär-Relaisventilvorratsanschluss 126.1 auf, der mit dem zweiten Sekundär-Vorratsanschluss 58.1 verbunden ist und von diesem Vorratsdruck pV empfängt. Darüber hinaus weist das zweite Sekundär-Relaisventil 126 einen zweiten Sekundär-Relaisventilarbeitsanschluss 126.2 auf, der mit dem zweiten Sekundär-Arbeitsanschluss 58.3 verbunden ist und an diesem den zweiten Hinterachs-Bremssteuerdruck pHBS2 aussteuert. Dieser wird dann an dem zweiten Primär-Redundanzanschluss 56.2 ausgesteuert und so dem zweiteb Primärmodulator 56 bereitgestellt.

Wie dies im Grunde mit Bezug auf den ersten Primärmodulator 52 bereits beschrieben wurde, weist auch der zweite Primärmodulator 56 eine zweite Primär-Vorsteuereinheit 72 und eine zweite Primär-Hauptventileinheit 74 auf. Die zweite Primär-Vorsteuereinheit 72 weist ein zweites Primär-Einlassventil 127, ein zweites Primär-Auslassventil 128 und ein zweites Primär-Redundanzventil 129 auf.

Das zweite Primär-Einlassventil 127 weist einen dritten Primär-Einlassventilanschluss 127.1 auf, der mit dem zweiten Primär-Vorratsanschluss 56.1 verbunden ist und Vorratsdruck pV empfängt. Ein vierter Primär-Einlassventilanschluss 127.2 ist mit der zweiten Primär-Hauptventileinheit 74 verbunden und steuert an dieser einen vierten Steuerdruck pS4 aus. Genauer gesagt umfasst die zweite Primär-Hauptventileinheit 74 ein zweites Primär-Relaisventil 130, mit einem zweiten Primär-Relaisventilvorratsanschluss 130.1, der mit dem zweiten Primär-Vorratsanschluss 56.1 verbunden ist und von diesem Vorratsdruck pV empfängt, einem zweiten Primär-Relaisventilarbeitsanschluss 130.2, der mit dem zweiten Primär-Arbeitsanschluss 56.3 verbunden ist, um an diesem den Hinterachs-Bremsanforderungsdruck pHAS bereitzustellen, einem zweiten Primär-Relaisventilentlüftungsanschluss 130.3, der mit einer Entlüftung verbunden ist, sowie einem zweiten Primär-Relaisventilsteueranschluss 130.4, der mit der zweiten Primär-Vorsteuereinheit 72 verbunden ist und den vierten Steuerdruck pS4 empfängt. Das zweite Primär-Relaisventil 130 ist dazu ausgebildet, den vierten Steuerdruck pS4 zu empfangen, volumenzuverstärken und basierend auf dem Empfang von dem vierten Steuerdruck pS4 den Hinterachs-Bremsanforderungsdruck pHAS auszusteuern. Zum Entlüften des zweiten Primär-Relaisventilsteueranschlusses 130.4 ist das zweite Primär-Auslassventil 128 vorgesehen, welches über einen dritten Primär-Auslassventilanschluss 128.1 mit dem zweiten Primär-Relaisventilsteueranschluss 130.4 verbunden ist. Ein vierter Primär-Auslassventilanschluss 128.2 ist mit einer Entlüftung 7 verbunden. Das zweite Primär-Einlassventil 127 und das zweite Primär-Auslassventil 128 werden von der zweiten elektronischen Steuereinheit ECU2 mittels eines siebten und eines achten Schaltsignals S7, S8 von der jeweils in Figur 5 gezeigten geschlossenen ersten Schaltstellung in die zweite in Figur 5 nicht gezeigte geöffnete Schaltstellung verbracht. Mittels des siebten Schaltsignals S7 lässt sich der vierte Steuerdruck pS4 aussteuern, sodass in Antwort hierauf der Hinterachs-Bremsanforderungsdruck pHAS ausgesteuert wird. Über das achte Schaltsignal S8 lässt sich wiederum das zweite Primär-Auslassventil 128 schalten, sodass der vierte Steuerdruck pS4 entlüftet wird und infolgedessen kein Hinterachs-Bremsanforderungsdruck pHAS ausgesteuert wird. Die zweite elektronische Steuereinheit ECU2 ist dazu ausgebildet, das elektronische Bremsanforderungssignal SB zu empfangen und in Antwort hierauf entsprechend das siebte und achte Schaltsignal S7, S8 bereitzustellen, sodass ein Hinterachs-Bremsanforderungsdruck pHAS ausgesteuert wird, der in Übereinstimmung mit dem elektronischen Bremsanforderungssignal SB steht.

Wie auch mit Bezug auf den ersten Primärmodulator 52 beschrieben, weist auch der zweite Primärmodulator 56 ein Redundanzventil auf, nämlich das zweite Primär-Redundanzventil 129. Das zweite Primär-Redundanzventil 129 weist einen dritten Primär-Redundanzventilanschluss 129.1 auf, der mit dem zweiten Primär-Redundanzanschluss 56.2 verbunden ist und über diesen den zweiten Hinterachs-Bremssteuerdruck pHBS2 empfängt. Dem zweiten Primär-Redundanzanschluss 56.2 pneumatisch nachgeschaltet ist ein zweiter Primärdrucksensor 76, der ein zweites Drucksignal SP2 an der zweiten elektronischen Steuereinheit ECU2 bereitstellt. Die zweite elektronische Steuereinheit ECU2 ist in Übereinstimmung mit der ersten elektronischen Steuereinheit ECU1 dazu ausgebildet, das zweite Drucksignal SP2 mit dem Bremsanforderungssignal SB zu vergleichen und entsprechend zu entscheiden, basierend auf welchem dieser Signale ein höherer Hinterachs-Bremsanforderungsdruck pHAS ausgesteuert wird. Für die genaue Funktionalität wird auf die obige Beschreibung Bezug genommen, da sie hier in entsprechender Weise gilt.

Neben der eben beschriebenen rein pneumatischen Redundanz, bei der allein über den Bremswertgeber BST zunächst der erste Vorderachs-Bremssteuerdruck pVBS1 und der erste Hinterachs-Bremssteuerdruck pHBS1 ausgesteuert werden, diese dann den ersten und zweiten Sekundärmodulatoren 54, 58 bereitgestellt werden, die diesen Druck jeweils volumenverstärken und/oder durchsteuern, den volumenverstärkten oder durchgesteuerten Druck dann als zweiten Vorderachs-Bremssteuerdruck pVBS2 bzw. zweiten Hinterachs-Bremssteuerdruck pHBS2 an den ersten und zweiten Primärmodulatoren 52, 56 bereitstellen, die diesen Druck dann als Redundanzdruck verarbeiten und rein pneumatisch basierend auf diesem dann den Vorderachs-Bremsanforderungsdruck pVAS bzw. Hinterachs-Bremsanforderungsdruck pHAS aussteuern. Hierzu ist keine Elektronik erforderlich. Die Redundanzventile, nämlich das erste Sekundär-Redundanzventil 105, das erste Primär-Redundanzventil 108, das zweite Sekundär-Redundanzventil 125 und das zweite Primär-Redundanzventil 129 sind stromlos offen.

Die elektronische Redundanz nutzt nun einen ersten Bremswunschdrucksensor 80 und einen zweiten Bremswunschdrucksensor 82 (vgl. Figur 3). Der erste Bremswunschdrucksensor 80 ist dazu vorgesehen, den ersten Vorderachs-Bremssteuerdruck pVBS1 zu erfassen und der zweite Bremswunschdrucksensor 82 ist dazu vorgesehen, den ersten Hinterachs-Bremssteuerdruck pHBS1 zu erfassen. Dazu sind die beiden Bremswunschdrucksensoren 80, 82 stromabwärts des Bremswertgebers BST angeordnet. Der erste Bremswunschdrucksensor 80 ist dann mit der zweiten elektronischen Steuereinheit ECU2 des zweiten Primärmodulators 56 verbunden und stellt an dieser ein drittes Drucksignal SP3 bereit. In entsprechender Weise ist der zweite Bremswunschdrucksensor 82 mit der ersten elektronischen Steuereinheit ECU1 des ersten Primärmodulators 52 verbunden und stellt an dieser ein viertes Drucksignal SP4 bereit. Auf diese Weise erhält der zweite Primärmodulator 56, der für den zweiten Kanal K2 vorgesehen ist, Informationen über einen manuell ausgesteuerten ersten Vorderachs-Bremssteuerdruck pVBS1, der für den ersten Kanal K1 vorgesehen ist. Ebenso erhält der erste Primärmodulator 52 Informationen über den manuell ausgesteuerten ersten Hinterachs-Bremssteuerdruck pHBS1, der für den zweiten Kanal K2 vorgesehen ist.

Darüber hinaus ist die erste elektronische Steuereinheit ECU1 mit dem zweiten Sekundärmodulator 58 verbunden und die zweite elektronische Steuereinheit ECU2 ist mit dem ersten Sekundärmodulator 54 verbunden. Hier ist also eine Überkreuz-Anordnung vorgesehen. Die erste elektronische Steuereinheit ECU1 ist dazu vorgesehen und ausgebildet, Schaltsignale S10, S11, S12 an dem zweiten Sekundärmodulator 58 bereitzustellen, genauer gesagt an den zweiten elektromagnetisch schaltbaren Sekundärventilen 59. Die zweite elektronische Steuereinheit ECU2 ist darüber hinaus dazu ausgebildet und vorgesehen, Schaltsignale S4, S5, S6 an dem ersten Sekundärmodulator 54, genauer gesagt an den ersten elektromagnetisch schaltbaren Sekundärventilen 55 bereitzustellen, um diese zu schalten. Auf diese Weise ist es nicht erforderlich, dass in einem Redundanzfall, wenn beispielsweise die erste elektronische Steuereinheit ECU1 oder die zweite elektronische Steuereinheit ECU2 ausfallen, der erste Vorderachs-Bremssteuerdruck pVBS1 bzw. der erste Hinterachs-Bremssteuerdruck pHBS1 rein pneumatisch in den ersten und zweiten Sekundärmodulatoren 54, 58 umgesetzt werden. Vielmehr ist es möglich, dass die entsprechenden dritten und vierten Drucksignale SP3, SP4 verwendet werden und der erste bzw. der zweite Primärmodulator 52, 56 dann entsprechend den jeweils zugeordneten zweiten bzw. ersten Sekundärmodulator 54, 58 ansteuert, um auf diese Weise eine elektronische Aussteuerung des zweiten Vorderachs-Bremssteuerdrucks pVBS2 bzw. zweiten Hinterachs-Bremssteuerdrucks pHBS2 zu erreichen. Dieser kann dann wieder in dem jeweils ausgefallenen Primärmodulator 52, 56 als Redundanzdruck rein pneumatisch umgesetzt werden. Dies ermöglicht es dem jeweils noch funktionierenden Primärmodulator 52, 56, nicht nur die reine Höhe des vom Bremswertgeber BST ausgesteuerten Drucks zu verwenden, sondern insbesondere auch, weitere Informationen wie eine Bremsdruckverteilung, eine Beladung oder dergleichen, die über den ersten bzw. zweiten Bus 230, 232 von der Einheit für autonomes Fahren 204 bereitgestellt werden.

Im Detail ist dies wiederum in den Figuren 4 und 5 zu sehen. Mit Bezug auf den ersten Sekundärmodulator 54 ist zu sehen, dass das erste Sekundär-Einlassventil 103 durch ein viertes Schaltsignal S4 der zweiten elektronischen Steuereinheit ECU2 von der in Figur 4 gezeigten ersten geschlossenen Schaltstellung in eine zweite in Figur 4 nicht gezeigte geöffnete Schaltstellung verbracht werden kann. Ebenso kann das erste Sekundär-Auslassventil 104 durch ein fünftes Schaltsignal S5 der zweiten elektronischen Steuereinheit ECU2 von einer ersten in Figur 4 gezeigten geschlossenen Schaltstellung in eine zweite in Figur 4 nicht gezeigte geöffnete Schaltstellung verbracht werden. Das erste Sekundär-Einlassventil 103 weist einen ersten Sekundär-Einlassventilanschluss 103.1 auf, der mit dem ersten Sekundär-Vorratsanschluss 54.1 verbunden ist und von diesem Vorratsdruck pV empfängt. Durch Schalten des ersten Sekundär-Einlassventils 103 in die zweite in Figur 4 nicht gezeigte Schaltstellung wird an einem zweiten Sekundär-Einlassventilanschluss 103.2 der Vorratsdruck pV durchgesteuert und so als der erste Steuerdruck pS1 an der ersten Sekundär-Hauptventileinheit 102, genauer gesagt an dem ersten Sekundär-Relaisventilsteueranschluss 106.4, bereitgestellt. Das erste Sekundär-Relaisventil 106 steuert daraufhin dann den zweiten Vorderachs-Bremssteuerdruck pVBS2 aus. Diese Aussteuerung wird als elektronische Aussteuerung bezeichnet, da sie basierend auf einem elektrisch geschalteten Ventil, nämlich dem ersten Sekundär-Einlassventil 103, erfolgt. Während dieses Betriebs kann vorgesehen sein, dass durch Bereitstellen eines sechsten Schaltsignals S6 durch die zweite elektronische Steuereinheit ECU2 das erste Sekundär-Redundanzventil 105 in die zweite in Figur 4 nicht gezeigte geschlossene Schaltstellung verbracht wird, um so den ersten Vorderachs-Bremssteuerdruck pVBS1 auszusperren, um ein Übersteuern zu vermeiden. Zum Entlüften der ersten Sekundär-Hauptventileinheit 102 ist das erste Sekundär-Auslassventil 104 vorgesehen, welches mit der ersten Sekundär-Hauptventileinheit 102 mit einem ersten Sekundär-Auslassventilanschluss 104.1 verbunden ist. Der zweite Sekundär-Auslassventilanschluss 104.2 ist mit einer Entlüftung 7 verbunden. Durch Bereitstellen des fünften Schaltsignals S5 durch die zweite elektronische Steuereinheit ECU2 kann also die erste Sekundär-Hauptventileinheit 102 entlüftet werden.

Analoges gilt ebenso für den zweiten Kanal K2 und somit für den zweiten Sekundärmodulator 58. Wie aus Figur 5 zu sehen, kann das zweite Sekundär-Einlassventil 123 durch ein zehntes Schaltsignal S10 geschaltet werden, das von der ersten elektronischen Steuereinheit ECU1 bereitgestellt wird, nämlich von einer ersten geschlossenen in Figur 5 gezeigten Schaltstellung in eine zweite in Figur 5 nicht gezeigte offene Schaltstellung. Das zweite Sekundär-Auslassventil 124 kann durch ein elftes Schaltsignal S11 von der ersten elektronischen Steuereinheit ECU1 von einer ersten in Figur 5 gezeigten geschlossenen Schaltstellung in eine zweite in Figur 5 nicht gezeigte offene Schaltstellung geschaltet werden, und das zweite Sekundär-Redundanzventil 125 kann durch ein zwölftes Schaltsignal S12 von der ersten elektronischen Steuereinheit ECU1 von einer ersten in Figur 5 gezeigten offenen Schaltstellung in eine zweite in Figur 5 nicht gezeigte geschlossene Schaltstellung verbracht werden. Wiederum kann das zweite Sekundär-Einlassventil 123, das mit einem dritten Sekundär-Einlassventilanschluss 123.1 mit dem zweiten Sekundär-Vorratsanschluss 58.1 verbunden ist und Vorratsdruck pV empfängt und mit einem vierten Sekundär-Einlassventilanschluss 132.2 mit der zweiten Sekundär-Hauptventileinheit 122, genauer gesagt mit dem zweiten Sekundär-Relaisventilsteueranschluss 126.4 verbunden ist, geschaltet werden, um den dritten Steuerdruck pS3 bereitzustellen. Zum Entlüften des dritten Steuerdrucks pS3 kann dann das zweite Sekundär-Auslassventil 124 geschaltet werden, welches seinerseits mit einem dritten Sekundär-Auslassventilanschluss 124.1 mit der zweiten Sekundär-Hauptventileinheit 122 verbunden ist und mit einem vierten Sekundär-Auslassventilanschluss 124.2 mit einer Entlüftung 7 verbunden ist. Auf diese Weise ist es wieder möglich, wie mit Bezug auf den ersten Kanal K1 beschrieben, elektronisch den zweiten Hinterachs-Bremssteuerdruck pHBS2 auszusteuern. Während dieser Steuerung kann vorgesehen sein, dass durch Bereitstellen des zwölften Schaltsignals S12 das zweite Sekundär-Redundanzventil 125 geschlossen wird, um den ersten Hinterachs-Bremssteuerdruck pHBS1 auszusperren.

### Bezugszeichenliste (Teil der Beschreibung)

- 1: elektrisch steuerbares pneumatisches Bremssystem
- 1 `: pneumatisches Bremssystem (Stand der Technik)
- 2: Vorderachsbremskreis
- 3: erster Druckluftvorrat
- 4: Hinterachsbremskreis
- 5: zweiter Druckluftvorrat
- 6: Parkbremskreis
- 7: Entlüftung
- 8a, 8b: Vorderachsbremsaktuatoren
- 10a, 10b, 10c, 10d: Hinterachsbremsaktuatoren
- 20: Vorderachs-Relaisventil
- 22: Hinterachs-Relaisventil
- 50: zweikanaliges Druckmodulatorsystem
- 52: erster Primärmodulator
- 52.1: erster Primär-Vorratsanschluss
- 52.2: erster Primär-Redundanzanschluss
- 52.3: erster Primär-Arbeitsanschluss
- 54: erster Sekundärmodulator
- 54.1: erster Sekundär-Vorratsanschluss
- 54.2: erster Sekundär-Redundanzanschluss
- 54.3: erster Sekundär-Arbeitsanschluss
- 55: erste elektromagnetisch schaltbare Sekundärventile
- 56: zweiter Primärmodulator
- 56.1: zweiter Primär-Vorratsanschluss
- 56.2: zweiter Primär-Redundanzanschluss
- 56.3: zweiter Primär-Arbeitsanschluss
- 58: zweiter Sekundärmodulator
- 58.1: zweiter Sekundär-Vorratsanschluss
- 58.2: zweiter Sekundär-Redundanzanschluss
- 58.3: zweiter Sekundär-Arbeitsanschluss
- 59: zweite elektromagnetisch schaltbare Sekundärventile
- 62: erste Primär-Vorsteuereinheit
- 64: erste Primär-Hauptventileinheit
- 66: erster Primärdrucksensor
- 72: zweite Primär-Vorsteuereinheit
- 74: zweite Primär-Hauptventileinheit
- 76: zweiter Primärdrucksensor
- 80: erster Bremswunschdrucksensor
- 82: zweiter Bremswunschdrucksensor
- 100: erste Sekundär-Vorsteuereinheit
- 102: erste Sekundär-Hauptventileinheit
- 103: erstes Sekundär-Einlassventil
- 103.1: erster Sekundär-Einlassventilanschluss
- 103.2: zweiter Sekundär-Einlassventilanschluss
- 104: erstes Sekundär-Auslassventil
- 104.1: erster Sekundär-Auslassventilanschluss
- 104.2: zweiter Sekundär-Auslassventilanschluss
- 105: erstes Sekundär-Redundanzventil
- 105.1: erster Sekundär-Redundanzventilanschluss
- 105.2: zweiter Sekundär-Redundanzventilanschluss
- 106: erstes Sekundär-Relaisventil
- 106.1: erster Sekundär-Relaisventilvorratsanschluss
- 106.2: erster Sekundär-Relaisventilarbeitsanschluss
- 106.3: erster Sekundär-Relaisventilentlüftungsanschluss
- 106.4: erster Sekundär-Relaisventilsteueranschluss
- 107: erstes Primär-Einlassventil
- 107.1: erster Primär-Einlassventilanschluss
- 107.2: zweiter Primär-Einlassventilanschluss
- 108: erstes Primär-Auslassventil
- 108.1: erster Primär-Auslassventilanschluss
- 108.2: zweiter Primär-Auslassventilanschluss
- 109: erstes Primär-Redundanzventil
- 109.1: erster Primär-Redundanzventilanschluss
- 109.2: zweiter Primär-Redundanzventilanschluss
- 110: erstes Primär-Relaisventil
- 110.1: erster Primär-Relaisventilvorratsanschluss
- 110.2: erster Primär-Relaisventilarbeitsanschluss
- 110.3: erster Primär-Relaisventilentlüftungsanschluss
- 110.4: erster Primär-Relaisventilsteueranschluss
- 120: zweite Sekundär-Vorsteuereinheit
- 122: zweite Sekundär-Hauptventileinheit
- 123: zweites Sekundär-Einlassventil
- 123.1: dritter Sekundär-Einlassventilanschluss
- 123.2: vierter Sekundär-Einlassventilanschluss
- 124: zweites Sekundär-Auslassventil
- 124.1: dritter Sekundär-Auslassventilanschluss
- 124.2: vierter Sekundär-Auslassventilanschluss
- 125: zweites Sekundär-Redundanzventil
- 125.1: dritter Sekundär-Redundanzventilanschluss
- 125.2: vierter Sekundär-Redundanzventilanschluss
- 126: zweites Sekundär-Relaisventil
- 126.1: zweiter Sekundär-Relaisventilvorratsanschluss
- 126.2: zweiter Sekundär-Relaisventilarbeitsanschluss
- 126.3: zweiter Sekundär-Relaisventilentlüftungsanschluss
- 126.4: zweiter Sekundär-Relaisventilsteueranschluss
- 127: zweites Primär-Einlassventil
- 127.1: dritter Primär-Einlassventilanschluss
- 127.2: vierter Primär-Einlassventilanschluss
- 128: zweiter Primär-Auslassventil
- 128.1: dritter Primär-Auslassventilanschluss
- 128.2: vierter Primär-Auslassventilanschluss
- 129: zweites Primär-Redundanzventil
- 129.1: dritter Primär-Redundanzventilanschluss
- 129.2: vierter Primär-Redundanzventilanschluss
- 130: zweites Primär-Relaisventil
- 130.1: zweiter Primär-Relaisventilvorratsanschluss
- 130.2: zweiter Primär-Relaisventilarbeitsanschluss
- 130.3: zweiter Primär-Relaisventilentlüftungsanschluss
- 130.4: zweiter Primär-Relaisventilsteueranschluss
- 200: Fahrzeug
- 202: Nutzfahrzeug
- 204: Einheit für autonomes Fahren
- 206: Vorderachs-3/2-Wege-Ventil
- 208a, 208b: Vorderachs-ABS-Ventile
- 210: Zentralmodul
- 212a, 212b: Radsensoren Vorderachse
- 216: Hinterachs-3/2-Wege-Ventil
- 218a, 218b: Hinterachs-ABS-Ventile
- 220a, 220b: Radsensoren Hinterachse
- 222: Parkbremsmodul
- 224: Push-Pull-Ventil
- 226: Anhängersteuerventil
- 230: erster BUS
- 232: zweiter BUS
- 234: erste Spannungsleitung
- 236: erste Spannungsquelle
- 238: zweite Spannungsleitung
- 240: zweite Spannungsquelle
- ECU1: erste elektronische Steuereinheit
- ECU2: zweite elektronische Steuereinheit
- pV: Vorratsdruck
- pVBS1: erster Vorderachs-Bremssteuerdruck
- pHBS1: erster Hinterachs-Bremssteuerdruck
- pVBS2: zweiter Vorderachs-Bremssteuerdruck
- pHBS2: zweiter Hinterachs-Bremssteuerdruck
- pBVA: Vorderachsbremsdruck
- pBHA: Hinterachsbremsdruck
- pVAS: Vorderachs-Bremsanforderungsdruck
- pHAS: Hinterachs-Bremsanforderungsdruck
- pS1 -pS4: erster bis vierter Steuerdruck
- SB: elektronisches Bremsanforderungssignal
- S1-S12: erstes bis zwölftes Schaltsignal
- SP1-SP4: erstes bis viertes Drucksignal
- VA: Vorderachse
- HA: Hinterachse
- HA2: zweite Hinterachse

## Patentansprüche

1. Elektrisch steuerbares pneumatisches Bremssystem (1) für ein Fahrzeug (200), insbesondere Nutzfahrzeug (202), aufweisend:
einen Vorderachsbremskreis (2) für eine Vorderachse (VA) des Fahrzeugs (200) mit einem ersten Druckluftvorrat (3) und Vorderachsbremsaktuatoren (8a, 8b),
einen Hinterachsbremskreis (4) für wenigstens eine Hinterachse (HA, HA2) des Fahrzeugs (200) mit einem zweiten Druckluftvorrat (5) und Hinterachsbremsaktuatoren (10a, 10b, 10c, 10d),
und einen manuell betätigbaren Bremswertgeber (BST), der mit dem ersten und dem zweiten Druckluftvorrat (3, 5) verbunden ist, und bei Betätigung einen ersten Vorderachs-Bremssteuerdruck (pVBS1) und einen ersten Hinterachs-Bremssteuerdruck (pHBS1) aussteuert,
wobei der Vorderachsbremskreis (2) ein Vorderachs-Relaisventil (20) aufweist, das mit dem ersten Druckluftvorrat (3) verbunden ist und dazu ausgebildet ist, bei Empfang eines Vorderachs-Bremsanforderungsdrucks (pVAS) einen Vorderachsbremsdruck (pBVA) an den Vorderachsbremsaktuatoren (8a, 8b) auszusteuern, und
wobei der Hinterachsbremskreis (4) ein Hinterachs-Relaisventil (22) aufweist, das mit dem zweiten Druckluftvorrat (5) verbunden ist und dazu ausgebildet ist, bei Empfang eines Hinterachs-Bremsanforderungsdrucks (pHAS) einen Hinterachsbremsdruck (pBHA) an den Hinterachsbremsaktuatoren (10a, 10b, 10c, 10d) auszusteuern,
**gekennzeichnet durch** ein zweikanaliges Druckmodulatorsystem (50), welches zwischen den Bremswertgeber (BST) und das Vorder- und Hinterachs-Relaisventil (20, 22) geschaltet ist, wobei das zweikanalige Druckmodulatorsystem (50) dazu ausgebildet ist, ein elektronisches Bremsanforderungssignal (SB) von einer Einheit für autonomes Fahren (204) zu empfangen und in Antwort hierauf den Vorderachs-Bremsanforderungsdruck (pVAS) und den Hinterachs-Bremsanforderungsdruck (pHAS) auszusteuern, und das ferner dazu eingerichtet ist, den ersten Vorderachs-Bremssteuerdruck (pVBS1) und den ersten Hinterachs-Bremssteuerdruck (pHBS1) zu empfangen und wenigsten in einem Fehlerfall einer elektronischen Komponente (ECU1, ECU2) des Druckmodulatorsystems (50), den Vorderachs-Bremsanforderungsdruck (pVAS) in Abhängigkeit des ersten Vorderachs-Bremssteuerdrucks (pVBS1) und/oder den Hinterachs-Bremsanforderungsdruck (pHAS) in Abhängigkeit des ersten Hinterachs-Bremssteuerdrucks (pHBS1) auszusteuern.

2. Elektrisch steuerbares pneumatisches Bremssystem (1) nach Anspruch 1, wobei das zweikanalige Druckmodulatorsystem (50) dazu ausgebildet ist, den Vorderachs-Bremsanforderungsdruck (pVAS) in Abhängigkeit des ersten Vorderachs-Bremssteuerdrucks (pVBS1) und/oder den Hinterachs-Bremsanforderungsdruck (pHAS) in Abhängigkeit des ersten Hinterachs-Bremssteuerdrucks (pHBS1) dann auszusteuern, wenn wenigstens einer des ersten Vorderachs-Bremssteuerdrucks (pVBS1) und des ersten Hinterachs-Bremssteuerdrucks (pHBS1) einen höheren Vorderachs-Bremsanforderungsdruck (pVAS) und/oder Hinterachs-Bremsanforderungsdruck (pHAS) veranlasst als der durch das elektronische Bremsanforderungssignal (SB) angeforderte Vorderachs-Bremsanforderungsdruck (pVAS) und/oder Hinterachs-Bremsanforderungsdruck (pHAS).

3. Elektrisch steuerbares pneumatisches Bremssystem (1) nach Anspruch 1 oder 2, wobei das zweikanalige Druckmodulatorsystem (50)
für einen ersten Kanal (K1) einen ersten Primärmodulator (52) und einen ersten Sekundärmodulator (54) aufweist, die pneumatisch in Reihe geschaltet sind, und
für einen zweiten Kanal (K2) einen zweiten Primärmodulator (56) und einen zweiten Sekundärmodulator (58) aufweist, die pneumatisch in Reihe geschaltet sind.

4. Elektrisch steuerbares pneumatisches Bremssystem (1) nach Anspruch 3, wobei der erste Sekundärmodulator (54) zwischen den ersten Primärmodulator (52) und den Bremswertgeber (BST) geschaltet ist, und der zweite Sekundärmodulator (58) zwischen den zweiten Primärmodulator (56) und den Bremswertgeber (BST) geschaltet ist.

5. Elektrisch steuerbares pneumatisches Bremssystem (1) nach einem der Ansprüche 3 bis 4, wobei der erste Primärmodulator (52) eine erste elektronische Steuereinheit (ECU1) und der zweite Primärmodulator (56) eine zweite elektronische Steuereinheit (ECU2) aufweist, die jeweils das elektronische Bremsanforderungssignal (SB) empfangen, wobei der erste Primärmodulator (52) dazu ausgebildet ist, in Antwort auf den Empfang des elektronischen Bremsanforderungssignals (SB) den Vorderachs-Bremsanforderungsdruck (pVAS) auszusteuern, und wobei der zweite Primärmodulator (56) dazu ausgebildet ist, in Antwort auf den Empfang des elektronischen Bremsanforderungssignals (SB) den Hinterachs-Bremsanforderungsdruck (pHAS) auszusteuern.

6. Elektrisch steuerbares pneumatisches Bremssystem (1) nach Anspruch 5, wobei
der erste Sekundärmodulator (54) ein oder mehrere erste elektromagnetisch schaltbare Sekundärventile (55) aufweist, die elektrisch mit der zweiten elektronischen Steuereinheit (ECU2) verbunden sind, um von dieser Schaltsignale (S4, S5, S6) zu empfangen, und
der zweite Sekundärmodulator (58) ein oder mehrere zweite elektromagnetisch schaltbare Sekundärventile (59) aufweist, die elektrisch mit der ersten elektronischen Steuereinheit (ECU1) verbunden sind, um von dieser Schaltsignale (S10, S11, S12) zu empfangen.

7. Elektrisch steuerbares pneumatisches Bremssystem (1) nach einem der Ansprüche 3 bis 6, wobei
der erste Sekundärmodulator (54) einen ersten Sekundär-Vorratsanschluss (54.1) zum Empfangen von Vorratsdruck (pV), einen ersten Sekundär-Redundanzanschluss (54.2) zum Empfangen des ersten Vorderachs-Bremssteuerdrucks (pVBS1) von dem Bremswertgeber (BST) und einen ersten Sekundär-Arbeitsanschluss (54.3) zum Aussteuern eines zweiten Vorderachs-Bremssteuerdrucks (pVBS2) an dem ersten Primärmodulator (52) aufweist; und
der zweite Sekundärmodulator (58) einen zweiten Sekundär-Vorratsanschluss (58.1) zum Empfangen von Vorratsdruck (pV), einen zweiten Sekundär-Redundanzanschluss (58.2) zum Empfangen des ersten Hinterachs-Bremssteuerdrucks (pHBS1) von dem Bremswertgeber (BST) und einen zweiten Sekundär-Arbeitsanschluss (58.3) zum Aussteuern eines zweiten Hinterachs-Bremssteuerdrucks (pHBS2) an dem zweiten Primärmodulator (56) aufweist.

8. Elektrisch steuerbares pneumatisches Bremssystem (1) nach Anspruch 7, wobei der erste und zweite Sekundär-Redundanzanschluss (54.2, 58.2) im Normalbetrieb offen zum Bremswertgeber (BST) sind.

9. Elektrisch steuerbares pneumatisches Bremssystem (1) nach einem der Ansprüche 3 bis 6, wobei
der erste Primärmodulator (52) einen ersten Primär-Vorratsanschluss (52.1) zum Empfangen von Vorratsdruck (pV), einen ersten Primär-Redundanzanschluss (52.2) zum Empfangen des zweiten Vorderachs-Bremssteuerdrucks (pVBS2) oder des ersten Vorderachs-Bremssteuerdrucks (pVBS1), und einen ersten Primär-Arbeitsanschluss (52.3) zum Aussteuern des Vorderachs-Bremsanforderungsdruck (pVAS) an dem Vorderachs-Relaisventil (20) aufweist, und wobei
der zweite Primärmodulator (56) einen zweiten Primär-Vorratsanschluss (56.1) zum Empfangen von Vorratsdruck (pV), einen zweiten Primär-Redundanzanschluss (56.2) zum Empfangen des zweiten Hinterachs-Bremssteuerdrucks (pHBS2), und einen zweiten Primär-Arbeitsanschluss (56.3) zum Aussteuern des Hinterachs-Bremsanforderungsdruck (pHAS) an dem Hinterachs-Relaisventil (22) aufweist.

10. Elektrisch steuerbares pneumatisches Bremssystem (1) nach Anspruch 9, wobei
der erste Primärmodulator (52) den zweiten Vorderachs-Bremssteuerdruck (pVBS2) aussperrt, wenn in Antwort auf diesen ein geringerer Vorderachs-Bremsanforderungsdruck (pVAS) ausgesteuert wird als der durch das elektronische Bremsanforderungssignal (SB) angeforderte Vorderachs-Bremsanforderungsdruck (pVAS), und wobei
der zweite Primärmodulator (56) den zweiten Hinterachs-Bremssteuerdruck (pHBS2) aussperrt, wenn in Antwort auf diesen ein geringerer Hinterachs-Bremsanforderungsdruck (pHAS) ausgesteuert wird als der durch das elektronische Bremsanforderungssignal (SB) angeforderte Hinterachs-Bremsanforderungsdruck (pHAS).

11. Elektrisch steuerbares pneumatisches Bremssystem (1) nach Anspruch 10, wobei
der erste Primärmodulator (52) einen ersten Primärdrucksensor (66) aufweist, der dem ersten Primär-Redundanzanschluss (52.2) nachgeschaltet ist, um den an diesem ersten Primär-Redundanzanschluss (52.2) anliegenden Druck (pVBS2) zu erfassen und ein entsprechendes erstes Drucksignal (SP1) an der ersten elektronischen Steuereinheit (ECU1) bereitzustellen, und wobei
der zweite Primärmodulator (56) einen zweiten Primärdrucksensor (76) aufweist, der dem zweiten Primär-Redundanzanschluss (56.2) nachgeschaltet ist, um den an diesem zweiten Primär-Redundanzanschluss (56.2) anliegenden Druck (pHBS2) zu erfassen und ein entsprechendes zweites Drucksignal (SP2) an der zweiten elektronischen Steuereinheit (ECU2) bereitzustellen.

12. Elektrisch steuerbares pneumatisches Bremssystem (1) nach einem der vorstehenden Ansprüche, aufweisend einen ersten Bremswunschdrucksensor (80) zum Erfassen des ersten Vorderachs-Bremssteuerdrucks (pVBS1) und einen zweiten Bremswunschdrucksensor (82) zum Erfassen des ersten Hinterachs-Bremssteuerdrucks (pHBS1).

13. Elektrisch steuerbares pneumatisches Bremssystem (1) nach Anspruch 5 und 12, wobei der erste Bremswunschdrucksensor (80) ein drittes Drucksignal (SP3) an der zweiten elektronischen Steuereinheit (ECU2) bereitstellt, und der zweite Bremswunschdrucksensor (82) ein viertes Drucksignal (SP4) an der ersten elektronischen Steuereinheit (ECU1) bereitstellt.

14. Fahrzeug (200), insbesondere Nutzfahrzeug (202), mit einem elektrisch steuerbaren pneumatischen Bremssystem (1) nach einem der vorstehenden Ansprüche.

## Claims

1. Electrically controllable pneumatic brake system (1) for a vehicle (200), in particular a utility vehicle (202), comprising:
a front-axle brake circuit (2) for a front axle (VA) of the vehicle (200) having a first compressed-air supply (3) and front-axle brake actuators (8a, 8b),
a rear-axle brake circuit (4) for at least one rear axle (HA, HA2) of the vehicle (200) having a second compressed-air supply (5) and rear-axle brake actuators (10a, 10b, 10c, 10d),
and a manually operable brake value transmitter (BST), which is connected to the first and second compressed-air supply (3, 5) and, upon actuation, adjusts a first front-axle brake control pressure (pVBS1) and a first rear-axle brake control pressure (pHBS1),
the front axle brake circuit (2) comprising a front-axle relay valve (20), which is connected to the first compressed-air supply (3) and is designed to adjust a front-axle brake pressure (pBVA) at the front-axle brake actuators (8a, 8b) when a front-axle brake demand pressure (pVAS) is received, and
the rear-axle brake circuit (4) comprising a rear-axle relay valve (22), which is connected to the second compressed-air supply (5) and is designed to adjust a rear-axle brake pressure (pBHA) at the rear-axle brake actuators (10a, 10b, 10c, 10d) when a rear-axle brake demand pressure (pHAS) is received,
**characterized by** a dual-channel pressure modulator system (50), which is connected between the brake value transmitter (BST) and the front- and rear-axle relay valve (20, 22), the dual-channel pressure modulator system (50) being designed to receive an electronic brake demand signal (SB) from a unit for autonomous driving (204) and, in response thereto, to adjust the front-axle brake demand pressure (pVAS) and the rear-axle brake demand pressure (pHAS), and which is also designed to receive the first front-axle brake control pressure (pVBS1) and the first rear-axle brake control pressure (pHBS1) and, at least in the event of a fault in an electronic component (ECU1, ECU2) of the pressure modulator system (50), to adjust the front-axle brake demand pressure (pVAS) on the basis of the first front-axle brake control pressure (pVBS1) and/or the rear-axle brake demand pressure (pVAS) on the basis of the first rear-axle brake control pressure (pHBS1).

2. Electrically controllable pneumatic brake system (1) according to claim 1, wherein the dual-channel pressure modulator system (50) is designed to adjust the front-axle brake demand pressure (pVAS) on the basis of the first front-axle brake control pressure (pVBS1) and/or the rear-axle brake demand pressure (pHAS) on the basis of the first rear-axle brake control pressure (pHBS1) when at least one of the first front-axle brake control pressure (pVBS1) and the first rear-axle brake control pressure (pHBS1) causes a front-axle brake demand pressure (pVAS) and/or rear-axle brake demand pressure (pHAS) which is higher than the front-axle brake demand pressure (pVAS) and/or rear-axle brake demand pressure (pHAS) demanded by the electronic brake demand signal (SB).

3. Electrically controllable pneumatic brake system (1) according to claim 1 or 2, wherein the dual-channel pressure modulator system (50)
comprises a first primary modulator (52) and a first secondary modulator (54) for a first channel (K1), which are pneumatically connected in series, and
comprises a second primary modulator (56) and a second secondary modulator (58) for a second channel (K2), which are connected pneumatically in series.

4. Electrically controllable pneumatic brake system (1) according to claim 3, wherein the first secondary modulator (54) is connected between the first primary modulator (52) and the brake value transmitter (BST), and the second secondary modulator (58) is connected between the second primary modulator (56) and the brake value transmitter (BST).

5. Electrically controllable pneumatic brake system (1) according to any of claims 3 to 4, wherein the first primary modulator (52) comprises a first electronic control unit (ECU1) and the second primary modulator (56) comprises a second electronic control unit (ECU2), each of which receives the electronic brake demand signal (SB), wherein the first primary modulator (52) is designed to adjust the front-axle brake demand pressure (pVAS) in response to receiving the electronic brake demand signal (SB), and wherein the second primary modulator (56) is designed to adjust the rear-axle brake demand pressure (pHAS) in response to receiving the electronic brake demand signal (SB).

6. Electrically controllable pneumatic brake system (1) according to claim 5, wherein
the first secondary modulator (54) comprises one or more first electromagnetically switchable secondary valves (55), which are electrically connected to the second electronic control unit (ECU2) in order to receive switching signals (S4, S5, S6) therefrom, and
the second secondary modulator (58) comprises one or more second electromagnetically switchable secondary valves (59) which are electrically connected to the first electronic control unit (ECU1) in order to receive switching signals (S10, S11, S12) therefrom.

7. Electrically controllable pneumatic brake system (1) according to any of claims 3 to 6, wherein
the first secondary modulator (54) comprises a first secondary supply port (54.1) for receiving supply pressure (pV), a first secondary redundancy port (54.2) for receiving the first front-axle brake control pressure (pVBS1) from the brake value transmitter (BST) and a first secondary working port (54.3) for adjusting a second front-axle brake control pressure (pVBS2) at the first primary modulator (52); and
the second secondary modulator (58) comprises a second secondary supply port (58.1) for receiving supply pressure (pV), a second secondary redundancy port (58.2) for receiving the first rear-axle brake control pressure (pHBS1) from the brake value transmitter (BST) and a second secondary working port (58.3) for adjusting a second rear-axle brake control pressure (pHBS2) at the second primary modulator (56).

8. Electrically controllable pneumatic brake system (1) according to claim 7, wherein the first and second secondary redundancy ports (54.2, 58.2) are open to the brake value transmitter (BST) during normal operation.

9. Electrically controllable pneumatic brake system (1) according to any of claims 3 to 6, wherein
the first primary modulator (52) comprises a first primary supply port (52.1) for receiving supply pressure (pV), a first primary redundancy port (52.2) for receiving the second front-axle brake control pressure (pVBS2) or the first front-axle brake control pressure (pVBS1), and a first primary working port (52.3) for adjusting the front-axle brake demand pressure (pVAS) at the front-axle relay valve (20), and wherein
the second primary modulator (56) comprises a second primary supply port (56.1) for receiving supply pressure (pV), a second primary redundancy port (56.2) for receiving the second rear-axle brake control pressure (pHBS2), and a second primary working port (56.3) for adjusting the rear-axle brake demand pressure (pHAS) at the rear-axle relay valve (22).

10. Electrically controllable pneumatic brake system (1) according to claim 9, wherein
the first primary modulator (52) locks out the second front-axle brake control pressure (pVBS2) when, in response thereto, a front-axle brake demand pressure (pVAS) is adjusted which is lower than the front-axle brake demand pressure (pVAS) demanded by the electronic brake demand signal (SB), and wherein
the second primary modulator (56) locks out the second rear-axle brake control pressure (pHBS2) when, in response thereto, a rear-axle brake demand pressure (pHAS) is adjusted which is lower than the rear-axle brake demand pressure (pHAS) demanded by the electronic brake demand signal (SB).

11. Electrically controllable pneumatic brake system (1) according to claim 10, wherein
the first primary modulator (52) comprises a first primary pressure sensor (66), which is downstream of the first primary redundancy port (52.2), in order to detect the pressure (pVBS2) applied at this first primary redundancy port (52.2) and to provide a corresponding first pressure signal (SP1) to the first electronic control unit (ECU1), and wherein
the second primary modulator (56) comprises a second primary pressure sensor (76), which is downstream of the second primary redundancy port (56.2), in order to detect the pressure (pHBS2) applied at this second primary redundancy port (56.2) and to provide a corresponding second pressure signal (SP2) to the second electronic control unit (ECU2).

12. Electrically controllable pneumatic brake system (1) according to any of the preceding claims, comprising a first brake request pressure sensor (80) for detecting the first front-axle brake control pressure (pVBS1) and a second brake request pressure sensor (82) for detecting the first rear-axle brake pressure (pHBS1).

13. Electrically controllable pneumatic brake system (1) according to claims 5 and 12, wherein the first brake request pressure sensor (80) provides a third pressure signal (SP3) to the second electronic control unit (ECU2), and the second brake request pressure sensor (82) provides a fourth pressure signal (SP4) to the first electronic control unit (ECU1).

14. Vehicle (200), in particular a utility vehicle (202), comprising an electrically controllable pneumatic brake system (1) according to any of the preceding claims.

## Revendications

1. Système de freinage pneumatique (1) à commande électrique pour un véhicule (200), en particulier un véhicule utilitaire (202), présentant :
un circuit de freinage d'essieu avant (2) pour un essieu avant (VA) du véhicule (200), comportant un premier réservoir d'air sous pression (3) et des actionneurs de freinage d'essieu avant (8a, 8b),
un circuit de freinage d'essieu arrière (4) pour au moins un essieu arrière (HA, HA2) du véhicule (200), comportant un second réservoir d'air sous pression (5) et des actionneurs de freinage d'essieu arrière (10a, 10b, 10c, 10d),
et un générateur de valeur de freinage (BST) à actionnement manuel, qui est relié aux premier et second réservoirs d'air sous pression (3, 5) et, lorsqu'il est actionné, ajuste une première pression de commande de freinage d'essieu avant (pVBS1) et une première pression de commande de freinage d'essieu arrière (pHBS1),
dans lequel le circuit de freinage d'essieu avant (2) présente une valve relais d'essieu avant (20) reliée au premier réservoir d'air sous pression (3) et conçue pour ajuster une pression de freinage d'essieu avant (pBVA) au niveau des actionneurs de freinage d'essieu avant (8a, 8b) à la réception d'une pression de demande de freinage d'essieu avant (pVAS), et
dans lequel le circuit de freinage d'essieu arrière (4) présente une valve relais d'essieu arrière (22) reliée au second réservoir d'air sous pression (5) et conçue pour ajuster une pression de freinage d'essieu arrière (pBHA) au niveau des actionneurs de freinage d'essieu arrière (10a, 10b, 10c, 10d) à la réception d'une pression de demande de freinage d'essieu arrière (pHAS),
**caractérisé par** un système modulateur de pression (50) à deux canaux, qui est monté entre le générateur de valeur de freinage (BST) et la valve relais d'essieu avant et arrière (20, 22), dans lequel le système modulateur de pression (50) à deux canaux est conçu pour recevoir un signal électronique de demande de freinage (SB) d'une unité de conduite autonome (204) et pour ajuster, en réponse à ladite réception, la pression de demande de freinage d'essieu avant (pVAS) et la pression de demande de freinage d'essieu arrière (pHAS) et est en outre conçu pour recevoir la première pression de commande de freinage d'essieu avant (pVBS1) et la première pression de commande de freinage d'essieu arrière (pHBS1) et pour ajuster, au moins dans un cas d'erreur d'un composant électronique (ECU1, ECU2) du système modulateur de pression (50), la pression de demande de freinage d'essieu avant (pVAS) en fonction de la première pression de commande de freinage d'essieu avant (pVBS1) et/ou la pression de demande de freinage d'essieu arrière (pHAS) en fonction de la première pression de commande de freinage d'essieu arrière (pHBS1).

2. Système de freinage pneumatique (1) à commande électrique selon la revendication 1, dans lequel le système modulateur de pression (50) à deux canaux est conçu pour n'ajuster la pression de demande de freinage d'essieu avant (pVAS) en fonction de la première pression de commande de freinage d'essieu avant (pVBS1) et/ou la pression de demande de freinage d'essieu arrière (pHAS) en fonction de la première pression de commande de freinage d'essieu arrière (pHBS1) que lorsqu'au moins l'une parmi la première pression de commande de freinage d'essieu avant (pVBS1) et la première pression de commande de freinage d'essieu arrière (pHBS1) donne lieu à une pression de demande de freinage d'essieu avant (pVAS) et/ou à une pression de demande de freinage d'essieu arrière (pHAS) supérieures à pression de demande de freinage d'essieu avant (pVAS) et/ou pression de demande de freinage d'essieu arrière (pHAS) requise par le signal électronique de demande de freinage (SB).

3. Système de freinage pneumatique (1) à commande électrique selon la revendication 1 ou 2, dans lequel le système modulateur de pression (50) à deux canaux présente,
pour un premier canal (K1), un premier modulateur primaire (52) et un premier modulateur secondaire (54) montés pneumatiquement en série, et
pour un second canal (K2), un second modulateur primaire (56) et un second modulateur secondaire (58) montés pneumatiquement en série.

4. Système de freinage pneumatique (1) à commande électrique selon la revendication 3, dans lequel le premier modulateur secondaire (54) est monté entre le premier modulateur primaire (52) et le générateur de valeur de freinage (BST), et le second modulateur secondaire (58) est monté entre le second modulateur primaire (56) et le générateur de valeur de freinage (BST).

5. Système de freinage pneumatique (1) à commande électrique selon l'une des revendications 3 à 4, dans lequel le premier modulateur primaire (52) présente une première unité de commande électronique (ECU1) et le second modulateur primaire (56) présente une seconde unité de commande électronique (ECU2) qui reçoivent chacune le signal électronique de demande de freinage (SB), dans lequel le premier modulateur primaire (52) est conçu pour ajuster la pression de demande de freinage d'essieu avant (pVAS) en réponse à la réception du signal électronique de demande de freinage (SB), et dans lequel le second modulateur primaire (56) est conçu pour ajuster la pression de demande de freinage d'essieu arrière (pHAS) en réponse à la réception du signal électronique de demande de freinage (SB).

6. Système de freinage pneumatique (1) à commande électrique selon la revendication 5, dans lequel
le premier modulateur secondaire (54) présente une ou plusieurs premières valves secondaires (55) à commutation électromagnétique qui sont reliées électriquement à la seconde unité de commande électronique (ECU2) pour recevoir des signaux de commutation (S4, S5, S6) provenant de celle-ci, et
le second modulateur secondaire (58) présente une ou plusieurs secondes valves secondaires (59) à commutation électromagnétique qui sont reliées électriquement à la première unité de commande électronique (ECU1) pour recevoir des signaux de commutation (S10, S11, S12) provenant de celle-ci.

7. Système de freinage pneumatique (1) à commande électrique selon l'une des revendications 3 à 6, dans lequel
le premier modulateur secondaire (54) présente un premier raccord de réserve secondaire (54.1) destiné à recevoir la pression de réserve (pV), un premier raccord de redondance secondaire (54.2) destiné à recevoir la première pression de commande de freinage d'essieu avant (pVBS1) provenant du générateur de valeur de freinage (BST) et un premier raccord de travail secondaire (54.3) permettant d'ajuster une seconde pression de commande de freinage d'essieu avant (pVBS2) au niveau du premier modulateur primaire (52) ; et
le second modulateur secondaire (58) présente un second raccord de réserve secondaire (58.1) destiné à recevoir la pression de réserve (pV), un second raccord de redondance secondaire (58.2) destiné à recevoir la première pression de commande de freinage d'essieu arrière (pHBS1) provenant du générateur de valeur de freinage (BST) et un second raccord de travail secondaire (58.3) permettant d'ajuster une seconde pression de commande de freinage d'essieu arrière (pHBS2) au niveau du second modulateur primaire (56).

8. Système de freinage pneumatique (1) à commande électrique selon la revendication 7, dans lequel les premier et second raccords de redondance secondaires (54.2, 58.2) sont ouverts vers le générateur de valeur de freinage (BST) en fonctionnement normal.

9. Système de freinage pneumatique (1) à commande électrique selon l'une des revendications 3 à 6, dans lequel
le premier modulateur primaire (52) présente un premier raccord de réserve primaire (52.1) destiné à recevoir la pression de réserve (pV), un premier raccord de redondance primaire (52.2) destiné à recevoir la seconde pression de commande de freinage d'essieu avant (pVBS2) ou la première pression de commande de freinage d'essieu avant (pVBS1), et un premier raccord de travail primaire (52.3) permettant d'ajuster la pression de demande de freinage d'essieu avant (pVAS) au niveau de la valve relais d'essieu avant (20), et dans lequel
le second modulateur primaire (56) présente un second raccord de réserve primaire (56.1) destiné à recevoir la pression de réserve (pV), un second raccord de redondance primaire (56.2) destiné à recevoir la seconde pression de commande de freinage d'essieu arrière (pHBS2), et un second raccord de travail primaire (56.3) permettant d'ajuster la pression de demande de freinage d'essieu arrière (pHAS) au niveau de la valve relais d'essieu arrière (22).

10. Système de freinage pneumatique (1) à commande électrique selon la revendication 9, dans lequel
le premier modulateur primaire (52) bloque la seconde pression de commande de freinage d'essieu avant (pVBS2) lorsque, en réponse à celle-ci, une pression de demande de freinage d'essieu avant (pVAS) réduite est ajustée par rapport à la pression de demande de freinage d'essieu avant (pVAS) requise par le signal électronique de demande de freinage (SB), et dans lequel
le second modulateur primaire (56) bloque la seconde pression de commande de freinage d'essieu arrière (pHBS2) lorsque, en réponse à celle-ci, une pression de demande de freinage d'essieu arrière (pHAS) réduite est ajustée par rapport à la pression de demande de freinage d'essieu arrière (pHAS) requise par le signal électronique de demande de freinage (SB).

11. Système de freinage pneumatique (1) à commande électrique selon la revendication 10, dans lequel
le premier modulateur primaire (52) présente un premier capteur de pression primaire (66) monté en aval du premier raccord de redondance primaire (52.2) pour détecter la pression (pVBS2) appliquée à ce premier raccord de redondance primaire (52.2) et pour fournir un premier signal de pression (SP1) correspondant à la première unité de commande électronique (ECU1), et dans lequel
le second modulateur primaire (56) présente un second capteur de pression primaire (76) monté en aval du second raccord de redondance primaire (56.2) pour détecter la pression (pHBS2) appliquée à ce second raccord de redondance primaire (56.2) et pour fournir un deuxième signal de pression (SP2) correspondant à la seconde unité de commande électronique (ECU2).

12. Système de freinage pneumatique (1) à commande électrique selon l'une des revendications précédentes, présentant un premier capteur de pression de freinage souhaité (80) destiné à détecter la première pression de commande de freinage d'essieu avant (pVBS1) et un second capteur de pression de freinage souhaité (82) destiné à détecter la première pression de commande de freinage d'essieu arrière (pHBS1).

13. Système de freinage pneumatique (1) à commande électrique selon la revendication 5 et 12, dans lequel le premier capteur de pression de freinage souhaité (80) fournit un troisième signal de pression (SP3) à la seconde unité de commande électronique (ECU2), et le second capteur de pression de freinage souhaité (82) fournit un quatrième signal de pression (SP4) à la première unité de commande électronique (ECU1).

14. Véhicule (200), en particulier véhicule utilitaire (202), comportant un système de freinage pneumatique (1) à commande électrique selon l'une des revendications précédentes.
